(19) **Europäisches Patentamt / European Patent Office / Office européen des brevets**

(11) **EP 3 701 221 B1**

(12) **FASCICULE DE BREVET EUROPEEN**

(45) Date de publication et mention de la délivrance du brevet:
**21.07.2021 Bulletin 2021/29**

(21) Numéro de dépôt: **18803752.7**

(22) Date de dépôt: **29.10.2018**

(51) Int Cl.:
*G01B 15/02* (2006.01)        *G01B 15/04* (2006.01)
*B07C 5/12* (2006.01)        *G06T 7/00* (2017.01)
*G06T 7/55* (2017.01)        *G06T 7/62* (2017.01)

(86) Numéro de dépôt international:
**PCT/FR2018/052681**

(87) Numéro de publication internationale:
**WO 2019/081875 (02.05.2019 Gazette 2019/18)**

(54) **PROCÉDÉ ET INSTALLATION DE CONTRÔLE DIMENSIONNEL EN LIGNE D'OBJETS MANUFACTURÉS**

VERFAHREN UND EINRICHTUNG ZUR INLINE-DIMENSIONSSTEUERUNG VON HERGESTELLTEN GEGENSTÄNDEN

METHOD AND FACILITY FOR THE IN-LINE DIMENSIONAL CONTROL OF MANUFACTURED OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2017 FR 1760175**

(43) Date de publication de la demande:
**02.09.2020 Bulletin 2020/36**

(73) Titulaire: **Tiama**
**69390 Vourles (FR)**

(72) Inventeurs:
• **COSNEAU, Laurent**
**69510 Soucieu-En-Jarrest (FR)**
• **COLLE, Olivier**
**69600 Oullins (FR)**

(74) Mandataire: **Cabinet Beau de Loménie**
**51 avenue Jean Jaurès**
**BP 7073**
**69301 Lyon Cedex 07 (FR)**

(56) Documents cités:
WO-A2-2010/092368        DE-A1- 19 756 697
DE-A1-102014 103 137        JP-A- S60 260 807
US-A- 5 864 600        US-A1- 2009 262 891
US-A1- 2010 220 910

**EP 3 701 221 B1**

**Description**

L'invention concerne le domaine du contrôle dimensionnel par rayons X, d'objets manufacturés de nature identique formant une série d'objets.

L'objet de l'invention vise plus particulièrement à obtenir la mesure par rayons X, de dimensions linéaires c'est-à-dire des longueurs prises sur des objets manufacturés au sens général tels que par exemple sur des récipients, des pièces moulées ou usinées, des pièces mécaniques, des emballages, des éléments de carrosserie.

L'art antérieur connaît diverses techniques permettant le contrôle dimensionnel d'objets par rayons X. Sont également connus des systèmes d'inspection de bagages, qui ne visent pas à mesurer les dimensions d'objets connus mais à détecter des objets prohibés ou des quantités de matériaux prohibés se présentant dans des dispositions, formes et quantités pratiquement aléatoires.

Il est ainsi connu les systèmes à rotation axiale dont fait partie la tomographie assistée par ordinateur ou CT (« computed tomography »). Cette méthode classique est décrite dans l'article de « Computed tomography for dimensional metrology » de J.P.Kruth(1) & all, dans CIRP Annals Volume 60, Issue 2, 2011, Pages 821-842 et mise en œuvre par exemple, par les appareils de tomographie commercialisés par les sociétés *Werth Messtechnik* ou *General Electric.* Cette méthode consiste à positionner entre un tube générateur de rayons X et un capteur d'images à rayons X matriciel ou linéaire, un objet sur un plateau tournant autour d'un axe vertical. Un très grand nombre (au moins 100 et souvent plus de 600) d'images radiographiques 2D des objets sont acquises durant la rotation. Si le capteur d'images est matriciel, le faisceau est conique. Si le capteur d'images est linéaire, le faisceau est avantageusement confiné en éventail (« fan beam ») dans un plan orthogonal à l'axe de rotation et la rotation s'accompagne d'une translation selon l'axe vertical de la rotation, pour un balayage complet de type hélicoïdal. Cette technique peut fournir des mesures tridimensionnelles de grande précision. Cependant, le temps d'acquisition nécessite au moins une minute pour les systèmes les plus rapides, auquel s'ajoutent les temps de chargement et de déchargement des objets de sorte que 10 à 30 objets sont inspectés au maximum par heure.

Une autre solution dite à portique rotatif est proposée par exemple par l'appareil connu sous la dénomination commerciale « *speed/scan CT 64* » de la *General Electric Company.* De même que certains scanners 3D pour des bagages, ce concept de solution est semblable aux tomographes d'imagerie médicale du point de vue des mouvements relatifs entre source, objet et capteur d'images. En effet les objets manufacturés ou les bagages, disposés sur un convoyeur, sont en translation dans l'appareil. Ils traversent un plan de projection orthogonal à la direction de déplacement. Dans un portique circulaire contenant ledit plan, on fait tourner autour de l'axe central de déplacement, une source de rayons X et un capteur d'images généralement incurvé, opposé à la source, pour obtenir, tranche par tranche ou par scan hélicoïdal, les projections nécessaires à la reconstruction 3D par un algorithme mettant en œuvre par exemple la méthode de « projection arrière filtrée » ou la méthode ART. L'objectif de ces appareils est de permettre l'acquisition d'un très grand nombre de projections à chaque tour du portique, par exemple 100, voire 700 à 1 000 images par tranche. La reconstruction 3D des objets est faite par exemple tranche par tranche. Ayant en effet déterminé l'atténuation en tout point de la tranche, en concaténant les tranches obtenues pendant le déplacement de l'objet, on obtient une valeur d'atténuation en tout élément de volume de l'objet.

Si ces appareils à rotation d'axe vertical ou à portique rotatif sont très précis grâce au grand nombre d'images fournies, ces appareils sont coûteux et lents et sont en pratique réservés au contrôle hors ligne car ils ne sont pas adaptés au contrôle dimensionnel en ligne pour des cadences pouvant atteindre et dépasser 600 articles par minute avec des défilements de 1m/s.

La demande de brevet DE 10 2014 103137 décrit un procédé pour déterminer des caractéristiques géométriques sur une pièce à usiner à l'aide d'un système de détecteurs tomodensitométriques, constitué d'une source de rayons X, d'un détecteur plan et d'un axe mécanique pour faire tourner la pièce ou pour faire tourner la source de rayons X et le détecteur.

Le procédé acquiert des images radiographiques lors de la rotation et assure une représentation de la surface en utilisant un modèle de la surface. Un tel procédé évite la mise en œuvre d'étapes de reconstruction des données de volume pour réduire le temps de calcul. Une telle technique ne permet pas de mesurer des pièces fabriquées à haute cadence car elle nécessite le chargement des pièces sur un plateau tournant puis une rotation sur au moins 180° puis son déchargement pour le contrôle d'une autre pièce.

Pour pallier les inconvénients du tube et capteur d'images embarqués sur un portique tournant, le brevet US 8 971 484 décrit un système d'inspection de bagages dans lequel le système tournant est remplacé par un réseau de sources de rayons X multifaisceaux stationnaires actionnées successivement pour créer un déplacement virtuel des sources de rayons X permettant de fournir un grand nombre d'images radiographiques avec des angles différents de projection. Par rapport aux systèmes à rotation physique limités à 4 tours par seconde, le nombre de « rotations virtuelles » est porté à 40 révolutions par seconde. Cette technique qui est mise en oeuvre par l'appareil connu sous la dénomination commerciale Rapiscan RTT de la société Rapiscan Systems, est apte à contrôler 1 200 bagages par heure, en réalisant des dizaines de milliers d'image 2D des bagages, en considérant que la rotation virtuelle fournit environ 40 angles de projection différents.

Cette technique s'avère très coûteuse en raison du prix élevé pour les multisources à rayons X et de la puissance de calcul nécessaire au traitement d'un volume très important de données. De plus, les cadences de contrôle sont encore limitées et ne sont pas adaptées au contrôle en ligne.

Les brevets US 7 319 737 et US 7 221 732 proposent de contrôler des bagages par une technique appelée laminographie digitale ou tomosynthèse. Les bagages traversent une succession de plans de projections coniques appelés « fan beam » et contenant chacun une paire de capteurs d'images linéaires disposés en L. Ces techniques visent à rechercher des armes ou des explosifs dans les bagages qui contiennent des objets de forme et matériaux très divers, en visualisant leurs positions 3D dans le bagage et en évaluant par exemple le volume de produit suspect. Il est fréquent d'utiliser une technologie multi spectrale afin de déterminer également le numéro atomique de la matière. Ces systèmes cherchent donc à déterminer une valeur d'atténuation en tout point d'un bagage. En revanche, ces systèmes ne sont pas aptes à déterminer à haute cadence et avec précision, des dimensions d'objets manufacturés dans le but d'un contrôle de qualité.

La demande de brevet JP S60 260807 propose de mesurer l'épaisseur des parois d'un tube se déplaçant en translation selon l'axe du tube, à l'aide de mesures par rayons X issus d'un ou de plusieurs foyers à chacun desquels sont associés des capteurs. Les foyers et les capteurs sont positionnés pour réaliser des projections radiographiques selon un plan orthogonal à la direction de déplacement du tube. Les projections radiographiques sont donc coplanaires dans un plan de projection qui est orthogonal à l'axe de symétrie du tube. La direction de ces projections radiographiques fait un angle droit (90°) par rapport à la direction de déplacement. Cette technique ne permet pas de connaître complètement les surfaces interne et externe du tube. Le procédé décrit par cette demande de brevet permet de mesurer uniquement l'épaisseur cumulée des deux parois du tube dans la direction de projection, sans reconstruction d'un modèle tridimensionnel d'un tube qui permettrait de réaliser des mesures précises dans les autres directions.

De même, le brevet US 5 864 600 décrit un procédé pour déterminer le niveau de remplissage d'un récipient à l'aide d'une source de rayons X et d'un capteur disposés transversalement de part et d'autre du convoyeur de transport des récipients. Ce système ne permet pas d'effectuer des mesures pour une surface orientée non transversalement car ce document ne prévoit pas une modélisation tridimensionnelle des récipients.

La demande de brevet US 2009/0262891 décrit un système pour détecter par rayons X, des objets placés dans des bagages déplacés en translation par un convoyeur. Ce système comporte des tubes générateurs pulsés ou un capteur ayant une grande dimension parallèlement au sens de défilement. Ce document prévoit une méthode de reconstruction de l'objet qui ne donne pas satisfaction car l'absence de projections dans la direction de déplacement ne permet pas la mesure de dimensions dans la direction orthogonale au sens de déplacement. Le manque de projections radiographiques dans un secteur angulaire ne permet pas de réaliser un modèle numérique adapté pour assurer des mesures précises.

La demande de brevet DE 197 56 697 décrit un dispositif présentant les mêmes inconvénients que la demande de brevet US 2009/0262891.

La demande de brevet WO 2010/092368 décrit un dispositif de visualisation d'un objet se déplaçant en translation par rayons X à l'aide d'une source de radiation et de trois capteurs linéaires.

La demande de brevet US 2010/220910 décrit une méthode de détection d'anomalies d'un objet en réalisant un modèle 3D de référence représentant un objet idéal. Le procédé vise ensuite à comparer une image 2D acquise d'un objet réel à l'image 2D correspondante au modèle de référence pour en déduire une anomalie. Cette méthode ne permet pas de réaliser des mesures précises d'un objet et ne permet de contrôler un objet qu'uniquement dans les images 2D réalisées donc uniquement les directions orthogonales aux directions de projection.

L'objet de l'invention vise à remédier aux inconvénients de l'art antérieur en proposant un procédé peu coûteux à mettre en œuvre et permettant le contrôle dimensionnel précis par rayons X, d'objets manufacturés défilant en translation à haute cadence.

Il est connu en tomographie, que l'absence de projections radiographiques autour d'une direction donnée empêche la reconstruction des surfaces parallèles à cette direction, créant le phénomène de « frontière manquante », ce qui interdit pour un contrôle dimensionnel, la mesure de dimensions orthogonales aux projections radiographiques manquantes.

Un autre objet de l'invention vise donc à proposer un procédé permettant de réaliser des mesures précises sur des objets déplacés en translation, en construisant un modèle numérique tridimensionnel précis et complet alors que les projections radiographiques sont en nombre limité et ne peuvent pas être acquises autour de la direction de convoyage des objets.

Selon l'invention, le procédé de mesure automatique de dimensions linéaires d'objets manufacturés d'une série consiste à :

- choisir une série d'objets manufacturés dans laquelle chacun desdits objets est constitué d'un matériau avec un coefficient d'atténuation constant en tout point de l'objet ;
- choisir au moins une région à inspecter des objets dans laquelle au moins une dimension linéaire est à mesurer ;
- transporter, au moyen d'un dispositif de transport, les objets en mouvement dans une direction de déplacement selon une trajectoire sensiblement rectiligne dans un plan de convoyage, ces objets engendrant un volume de convoyage au cours de leur déplacement ;

- positionner, hors du volume de convoyage, au moins un foyer d'un tube générateur de rayons X et des capteurs d'images exposés et sensibles chacun aux rayons X issus d'un foyer associé, ces rayons X ayant traversés au moins la région à inspecter produisant sur chaque capteur d'images une projection radiographique selon la direction de projection ;

- acquérir à l'aide des capteurs d'images, pour chaque objet au cours de son déplacement, au moins trois images radiographiques de la région à inspecter, obtenues d'au moins trois projections radiographiques de la région à inspecter dont les directions de projection sont différentes entre elles ;

- analyser les au moins trois images radiographiques, à l'aide d'un système informatique ;

- mettre à la disposition du système informatique, un modèle géométrique a priori de la région à inspecter pour la série d'objets ;

- déterminer à l'aide du système informatique en considérant un coefficient d'atténuation constant et à partir du modèle géométrique a priori et d'au moins trois images radiographiques de la région à inspecter, un modèle géométrique numérique de la région à inspecter constitué d'au moins deux points tridimensionnels chacun appartenant à une surface frontière de la région à inspecter et situés dans un plan non orthogonal à une direction de projection ;

- déterminer à partir du modèle géométrique numérique de la région à inspecter, au moins une mesure de dimension linéaire de la région à inspecter pour chaque objet de la série, comme étant la distance entre au moins deux points tridimensionnels chacun appartenant à une surface frontière de la région à inspecter et situés dans un plan non orthogonal à une direction de projection.

De plus, le procédé selon l'invention peut comporter en outre en combinaison au moins l'une et/ou l'autre des caractéristiques additionnelles suivantes :

- à déterminer un modèle géométrique numérique constitué par :

  • au moins deux points tridimensionnels de l'espace chacun appartenant à une surface frontière de la région à inspecter et situés dans un plan non orthogonal à une direction de projection et non parallèle à la direction de déplacement ;
  • et/ou au moins une surface tridimensionnelle de la région à inspecter contenant des points n'appartenant pas à un plan orthogonal à une direction de projection, et n'appartenant pas à un plan parallèle à la direction de déplacement ;
  • et/ou au moins une section de la région à inspecter, selon un plan différent d'un plan orthogonal à une direction de projection et différent d'un plan parallèle à la direction de déplacement ;

- à mettre à la disposition du système informatique la valeur du coefficient d'atténuation constant ;

- à mettre à la disposition du système informatique, le modèle géométrique a priori de la région à inspecter pour la série, obtenu par :

  • le modèle numérique de conception par ordinateur des objets de la série ;
  • ou le modèle numérique géométrique obtenu à partir de la mesure d'un ou de plusieurs objets de la même série par un dispositif de mesure ;
  • ou le modèle numérique géométrique généré par le système informatique à partir de valeurs saisies et/ou de dessins réalisés et/ou de formes sélectionnées par un opérateur sur une interface homme machine du système informatique ;

- à positionner un foyer duquel est issu un faisceau de rayons X divergent d'ouverture supérieure ou égale à 120° ou au moins deux foyers desquels sont issus des faisceaux de rayons X divergents dont la somme des ouvertures est supérieure ou égale à 120° ;

- à disposer au moins un foyer dans le plan de convoyage ;

- à disposer d'un côté d'un plan sécant du volume de convoyage, orthogonal au plan de convoyage, un foyer duquel est issu un faisceau de rayons X divergent, de sorte que son faisceau traverse le plan sécant et la région à inspecter ;

- à disposer du côté opposé par rapport au plan sécant, au moins un capteur d'images associé audit foyer pour recevoir les rayons X issus dudit foyer ;

- à disposer d'un côté du plan de convoyage, un foyer duquel est issu un faisceau de rayons X divergent, de sorte que son faisceau traverse le plan de convoyage ;

- à disposer du côté opposé par rapport au plan de convoyage, au moins un capteur d'images associé audit foyer pour recevoir les rayons X issus dudit foyer ;

- à acquérir à l'aide des capteurs d'images, pour chaque objet de la série au cours de son déplacement, au moins deux images radiographiques de la région inspectée correspondant à des directions de projection définissant un angle utile supérieur ou égal à 45° et inférieur ou égal à 90° et, avantageusement supérieur ou égal à 60° et inférieur ou égal à 90° ;

- à acquérir à l'aide des capteurs d'image, pour chaque objet de la série au cours de son déplacement au moins une image radiographique de la région inspectée correspondant à une direction de projection ayant un angle d'ouverture avec la direction de déplacement compris entre 10° et 60° ;

- réaliser et acquérir des projections radiographiques de la région inspectée d'un objet de manière que les rayons X issus du ou des foyers et atteignant les capteurs d'images ne traversent pas d'autre objet ;

- à acquérir à l'aide des capteurs d'images, pour chaque objet de la série au cours de son déplacement, des images radiographiques issues d'entre trois et quarante, et de préférence d'entre quatre et quinze projections radiographiques de la région à inspecter de directions différentes ;
- les capteurs d'images sont de type linéaire comportant chacun un réseau linéaire d'éléments sensibles aux rayons X, distribués selon une droite de support définissant avec le foyer associé, un plan de projection contenant la direction de projection, ces capteurs d'images étant disposés de manière que :

    • au moins m éléments sensibles de chacun de ces capteurs d'images reçoivent la projection radiographique de la région à inspecter par le faisceau de rayons X issu du foyer associé ;
    • les plans de projection pour les différents capteurs sont distincts entre eux et non parallèles au plan de convoyage ;
    • on acquiert à l'aide de chacun des au moins trois capteurs d'images linéaires, à chaque déplacement incrémental de chaque récipient selon la trajectoire, des images linéaires radiographiques de la région à inspecter selon un nombre choisi afin que pour chaque objet, l'ensemble de la région à inspecter se trouve représentée complétement dans l'ensemble des images linéaires radiographiques ;
    • on analyse pour chaque objet, les au moins trois ensembles d'images linéaires radiographiques de la région à inspecter.

Un autre objet de l'invention est de proposer une installation de mesure automatique de dimensions linéaires d'au moins une région à inspecter d'objets manufacturés d'une série, l'installation comportant :

- un dispositif de transport des objets dans une direction matérialisée par un vecteur de déplacement, selon une trajectoire sensiblement rectiligne dans un plan de convoyage, les objets parcourant un volume de convoyage étendu dans la direction ;
- au moins un foyer d'un tube générateur de rayons X situé en dehors du volume traversé, et créant un faisceau divergent de rayons X dirigé pour traverser au moins une région à inspecter de l'objet ;
- au moins trois capteurs d'images, situés en dehors du volume de convoyage, de manière à recevoir des rayons X issus d'un foyer associé, le ou les foyers et les capteurs d'images étant disposés de manière que chaque capteur d'images reçoive la projection radiographique de la région à inspecter par les rayons issus du foyer lorsque l'objet traverse ces rayons, les directions de projection de ces projections radiographiques étant différentes entre elles ;
- un système d'acquisition relié aux capteurs d'images, de manière à acquérir pour chaque objet au cours de son déplacement, au moins trois projections radiographiques de la région à inspecter avec des directions de projection toutes différentes ;
- un dispositif de mise à disposition pour un système informatique, d'un modèle géométrique a priori de la région à inspecter pour la série d'objets ; le système informatique :

    • déterminant un modèle géométrique numérique pour chaque objet de la série constitué d'au moins deux points tridimensionnels chacun appartenant à une surface frontière de la région à inspecter et situés dans un plan non orthogonal à une direction de projection, en considérant un coefficient d'atténuation constant du matériau pour les objets, à partir du modèle géométrique a priori et d'au moins trois projections radiographiques de la région à inspecter ;
    • déterminant pour chaque objet de la série, à partir du modèle géométrique numérique de la région à inspecter, au moins une mesure linéaire de la région à inspecter comme étant pour chaque objet de la série la distance entre au moins deux points tridimensionnels chacun appartenant à une surface frontière de la région à inspecter et situés dans un plan non orthogonal à une direction de projection.

De plus, l'installation selon l'invention peut comporter en outre en combinaison au moins l'une et/ou l'autre des caractéristiques additionnelles suivantes :

- un dispositif de mise à disposition pour le système informatique, du coefficient d'atténuation du matériau des objets d'une série ;
- le dispositif de mise à disposition pour le système informatique, d'un modèle géométrique a priori de la région à inspecter est une mémoire de masse, un réseau informatique filaire ou hertzien ou une interface homme machine ;
- un dispositif de mise à disposition pour le système informatique, de valeurs et/ou de tolérances pour les dimensions linéaires exigées, et/ou d'au moins un modèle géométrique de référence ;
- au moins deux foyers de production de rayons X, positionnés séparément en deux positions distinctes et au moins trois capteurs d'images, sensibles aux rayons X et positionnés de manière que :

    • chaque foyer émet son faisceau à travers au moins la région à inspecter pour atteindre au moins un capteur associé ;
    • chaque capteur est associé à un foyer et reçoit les rayons X issus dudit foyer après avoir traversé la région à inspecter ;

- au moins un foyer duquel est issu un faisceau de rayons X divergent d'ouverture supérieure ou égale à 120° ou au moins deux foyers desquels sont issus des faisceaux de rayons X divergents dont la somme des ouvertures est supérieure ou égale à 120° ;
- au moins un foyer disposé dans le plan de convoyage ;
- d'un côté d'un plan sécant au volume de convoyage et orthogonal au plan de convoyage, un foyer duquel est issu un faisceau de rayons X divergent, de sorte que son faisceau traverse le plan sécant et la région à inspecter ;
- du côté opposé par rapport au plan sécant, au moins un capteur d'images associé audit foyer pour recevoir les rayons X issus dudit foyer ;
- d'un côté du plan de convoyage, un foyer duquel est issu un faisceau de rayons X divergent, de sorte que son faisceau traverse le plan de convoyage;
- du côté opposé par rapport au plan de convoyage, au moins un capteur d'images associé audit foyer pour recevoir les rayons X issus dudit foyer ;
- au moins un foyer et deux capteurs d'images sont disposés de manière que les directions de projection de la région inspectée qu'ils reçoivent possèdent entre elles un angle utile supérieur ou égal à 45° et inférieur ou égal à 90° et, avantageusement supérieur ou égal à 60° et inférieur ou égal à 90° ;
- au moins un foyer et un capteur d'images sont disposés de manière que, lorsqu'un objet traverse le champ des capteurs, la direction de projection de la région inspectée sur le capteur d'images fait un angle d'ouverture avec la direction de déplacement compris entre 10° et 60° ;
- les capteurs d'images et les foyers sont disposés de sorte que les rayons X issus du ou des foyers et atteignant les capteurs d'images et traversant la région d'un objet ne traversent pas d'autre objet à la fois ;
- entre un et quatre foyers, issus d'un ou de plusieurs tubes générateurs de rayons X ;
- le nombre et la disposition des capteurs d'images et des foyers associés, sont tels que pour chaque objet de la série au cours de son déplacement, les projections radiographiques de la région à inspecter sur les capteurs d'images présentent entre trois et quarante, et de préférence entre quatre et quinze directions de projection différentes ;
- les capteurs d'images sont de type linéaire et comportent chacun un réseau linéaire d'éléments sensibles aux rayons X, distribués selon une droite de support définissant avec le foyer associé, un plan de projection contenant la direction de projection, ces capteurs d'images étant disposés de manière que :
- au moins m éléments sensibles de chacun de ces capteurs d'images reçoivent la projection radiographique de la région à inspecter par le faisceau de rayons X issu du foyer associé ;
- les plans de projection pour les différents capteurs sont distincts entre eux et non parallèles au plan de convoyage ;
- au moins trois capteurs d'images linéaires ont leurs droites de support parallèles entre elles ;
- au moins trois capteurs d'images linéaires ont leurs droites de support orthogonales au plan de convoyage ;
- un foyer est positionné d'un côté du plan de convoyage, et selon l'invention au moins un capteur d'images linéaire associé, est positionné du côté opposé au foyer par rapport au plan de convoyage et de manière que sa droite support soit parallèle au plan de convoyage.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue schématique de dessus montrant une installation permettant la mesure par rayons X, de dimensions sur des objets défilant en ligne.
La **Figure 2** est une vue schématique en perspective de côté montrant une partie de l'installation permettant la mesure par rayons X, de dimensions sur un objet.
La **Figure 3** est une vue schématique en perspective montrant le volume traversé ou engendré par les objets au cours de leur déplacement linéaire.
La **Figure 4** est une vue schématique de dessus montrant un exemple de réalisation d'une installation conforme à l'invention comportant trois foyers générateurs de rayons X.
La **Figure 5** est une vue schématique en élévation transversale de l'installation illustrée à la **Fig. 4.**
La **Figure 6** est une vue schématique en élévation latérale de l'installation illustrée à la **Fig. 4.**
Les **Figures 7** et **8** sont des vues schématiques explicitant la définition de l'angle utile entre deux directions de projection.
Les **Figures 9** et **10** sont des vues schématiques en perspective montrant le positionnement de capteurs d'images par rapport au déplacement des objets à inspecter.
La **Figure 11** est une vue d'un exemple de réalisation d'une installation conforme à l'invention mettant en oeuvre des capteurs d'images matricielles.
La **Figure 12** est une vue d'une matrice d'éléments sensibles aux rayons X sur laquelle apparaît deux zones distinctes correspondant à deux capteurs d'images matricielles.

En préliminaire, quelques définitions des termes utilisés dans le cadre de l'invention sont données ci-après.
Un foyer **Fj** d'un tube générateur de rayons X est une source de rayons X ponctuelle, de préférence un « micro foyer », de diamètre par exemple entre 0.01 mm et 1 mm, créant un faisceau divergent de rayons X. Il est possible d'utiliser tout type de source de rayons X ponctuelle ou quasi ponctuelle.

Un élément sensible est un élément sensible aux rayons X, autrement dit une surface élémentaire, de dimension par exemple 0,2 x 0,2 mm ou 0,02 x 0,02 mm, convertissant les rayons X qu'elle reçoit en un signal électrique. Généralement, un scintillateur convertit les rayons X en lumière visible puis un capteur photo-électrique convertit la lumière visible en signal électrique. Des techniques de conversion directe des rayons X en signal électrique existent également. Un pixel désigne une valeur élémentaire d'un point d'une image échantillonnée, caractérisé par son niveau de gris entre 0 et une valeur maximale. Par exemple pour une image numérique 12 bits, un pixel prend des valeurs numériques entre 0 et 4 095.

Un système de lecture ou d'acquisition d'images radiographiques comporte une ou plusieurs surfaces sensibles aux rayons X, c'est-à-dire des surfaces comprenant des éléments sensibles convertissant les rayons X en un signal électrique pour être transmis à un système d'analyse mis en œuvre classiquement par un ordinateur et désigné par système informatique dans la suite de la description. Les signaux issus d'un ensemble d'éléments sensibles appartenant à une même zone de surface sensible, acquis par le dispositif d'acquisition et transmis ensemble au système informatique, constituent une image radiographique. Pour être analysées par le système informatique, les images radiographiques sont de préférence converties en images radiographiques numériques soit au plus près de la surface sensible, soit à distance au plus près du système informatique.

Les faisceaux de rayons X issus d'un foyer **Fj** traversent au moins une région inspectée, et forment sur une surface sensible, la projection radiographique de la région inspectée, qu'on appelle parfois l'image radiante et qui contient l'information d'atténuation des rayons X par le matériau traversé.

On appelle capteur d'images **Cji,** une zone de surface sensible aux rayons X qui reçoit la projection radiographique de la région inspectée. Un capteur d'images **Cji** est exposé aux rayons X issus d'un foyer **Fj** associé. Le capteur d'images convertit cette projection radiographique en une image radiographique de la région inspectée. Lorsque la zone de surface sensible contient une ligne d'éléments photosensibles, l'image radiographique transmise est linéaire, composée d'une ligne de pixels formant un tableau de valeurs à une dimension. Lorsque la zone de surface sensible contient une matrice d'éléments photosensibles, l'image radiographique transmise est matricielle, composée d'une matrice de pixels formant un tableau de valeurs à deux dimensions.

La direction de projection **Dji** est la direction orientée ou le vecteur, partant du foyer **Fj** pour passer par le centre du capteur d'images **Cji,** c'est-à-dire par le centre d'une zone sensible aux rayons X qui reçoit la projection radiographique de la région inspectée au moment de l'acquisition durant le déplacement de l'objet entre le foyer et le capteur d'images. Pour un couple capteur d'images-foyer associé, la direction de projection est le vecteur issu du foyer atteignant le milieu du capteur d'images. Le positionnement des capteurs d'images est tel que la surface sensible n'est pas parallèle à la direction de projection. Il peut être avantageux dans certains cas que la surface sensible du capteur d'images soit orthogonale à la direction de projection définie avec le foyer associé. Mais ce n'est pas obligatoire, par exemple si une surface sensible contient plusieurs zones sensibles qui coopèrent pour chaque prise d'image, avec plusieurs foyers différents, donc selon des directions de projection différentes.

Les directions de projection **Dji** de projections radiographiques sont différentes si les directions de projection **Dji** prises deux à deux font entre-elles un angle minimum au moins égal à 5°.

Une zone de surface sensible contenant une seule ligne d'éléments sensibles constitue un capteur d'images linéaires, qui comporte un réseau linéaire d'éléments sensibles, distribués selon un segment de droite de support. Selon cette définition, une colonne ou une ligne appartenant à une surface sensible matricielle, acquise et transmise séparément par le dispositif d'acquisition est considérée comme un capteur d'images linéaires. Plusieurs zones de surface sensibles d'une même surface et contenant chacune une seule ligne de pixels différentes constituent donc plusieurs capteurs d'images linéaires. La direction de projection associée à l'image radiographique linéaire obtenue est donc la direction partant du foyer et passant par le milieu du segment de droite de support à l'instant de l'acquisition de l'image.

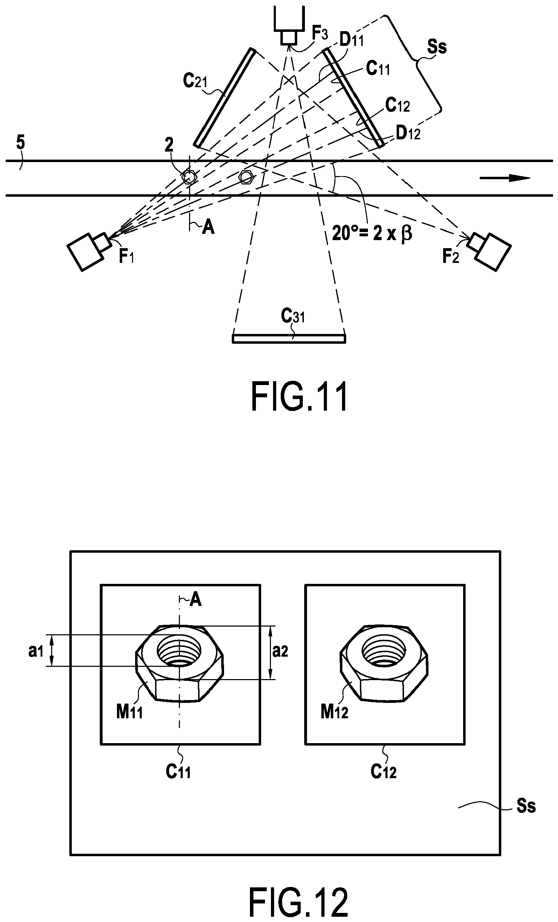

Une zone de surface sensible qui contient une matrice d'éléments sensibles constitue un capteur d'images matricielles, qui comporte un réseau matriciel d'éléments sensibles aux rayons X, distribués selon une matrice. Comme illustré à la **Fig. 11,** selon cette définition, une zone de surface sensible matricielle **C11, C12,** qui appartient à une plus grande surface sensible **Ss,** et qui est acquise et transmise séparément par le dispositif d'acquisition est un capteur d'images matricielles. Plusieurs zones de surface sensible matricielles **C11, C12** d'une même surface, acquises et transmises séparément par le dispositif d'acquisition constituent donc plusieurs capteurs d'images matricielles fournissant des images radiographiques différentes respectivement **M11, M12 (Fig. 12).** La direction **D11, D12** de projection associée à l'image radiographique matricielle respectivement **M11, M12** est la direction partant du foyer **F1** et passant par le milieu de la zone **C11, C12** de surface sensible matricielle, à l'instant de l'acquisition de l'image. Il est possible donc que les capteurs d'images **C11, C12** soient des régions non disjointes activées successivement dans le temps.

Bien entendu, l'homme du métier peut utiliser une technologie de capteur matriciel basé sur un amplificateur de brillance ou bien une « caméra à reprise d'écran » dans laquelle une plaque de scintillateur reçoit l'image radiante, la convertit en lumière visible, l'image visible à l'arrière du scintillateur étant photographiée par une caméra visible munie si besoin d'un objectif.

L'invention s'applique à des séries d'objets manufacturés composés d'un matériau, tels que des objets obtenus par usinage, moulage, soufflage, frittage, injection, extrusion, dont le coefficient d'atténuation $\mu$ est unique, c'est-à-dire ayant la même valeur en tout point d'une région à inspecter de l'objet et de préférence constant dans le temps et identique pour les objets de la série. Par exemple des pièces mécaniques de fonderie d'acier ou d'aluminium, des bouteilles en verre, des emballages en plastique. Il s'agit généralement d'objets dit mono-matériau. Toutefois l'invention peut être mise en œuvre pour des objets multi-matériaux, pourvu que le coefficient d'atténuation soit constant, au sens d'uniforme sur l'ensemble de la région inspectée.

Il est à noter que le coefficient d'atténuation $\mu$ d'un matériau est en toute rigueur une propriété spectrale $\mu(\lambda)$ selon la longueur d'onde $\lambda$ ou l'énergie des rayons X. Cette caractéristique n'est pas nécessairement prise en compte dans la mesure où la source de rayons X ayant une composition spectrale émise propre, il est possible de considérer que l'atténuation $\mu$ est une caractéristique du matériau pour le spectre de la source choisie. L'homme du métier saura par ailleurs réaliser l'invention en utilisant toute méthode de prise en compte de l'atténuation spectrale ou de durcissement des faisceaux.

Bien entendu, des variations locales et/ou temporelles du coefficient d'atténuation $\mu$ de faible amplitude n'empêchent pas la mise en œuvre du procédé, mais pourraient éventuellement selon leur amplitude causer des pertes légères ou sensibles de précision dans les mesures réalisées par l'installation. On considère donc que de telles variations faibles dues par exemple à des variations de composition des objets, des variations dans des paramètres du procédé de fabrication, des modifications des conditions environnementales, ou encore des changements dans le fonctionnement des sources de rayons X, sont possibles tout en considérant l'unicité et la constance de l'atténuation du matériau comme vérifiées.

L'atténuation de l'air peut être considérée négligeable devant celle du matériau. Dans ce cas, l'atténuation d'un faisceau de rayons X traversant l'objet ne dépendra que d'une part, de ladite atténuation constante pour le spectre de rayons X émis, et d'autre part, de l'épaisseur cumulée de matériau traversée. Alternativement, il est considéré que l'épaisseur d'air traversé est grande et uniforme pour tous les faisceaux, elle peut donc être considérée comme connue. L'atténuation due à l'air peut être soustraite de l'atténuation totale mesurée. Ainsi, le niveau de gris dans chaque image radiographique, éventuellement corrigé, dépend uniquement et directement de l'épaisseur de matériau traversée cumulée totale. Il est alors possible de déterminer avec précision des surfaces frontières qui sont les transitions entre l'air et la matière.

L'analyse numérique des images radiographiques de chaque objet permet de construire un modèle géométrique numérique tridimensionnel de chaque objet, désigné par modèle géométrique numérique dans la suite de la description. Eventuellement, ce modèle géométrique numérique peut être simplement un empilement de modèles géométriques numériques bidimensionnels. La réalisation d'un modèle géométrique numérique est la façon - en termes mathématique, graphique et de structure de données - dont des objets tridimensionnels sont représentés et manipulés sous forme numérique dans une mémoire d'un système informatique. Il est à considérer que l'objet de l'invention vise à déterminer autant de modèles géométriques numériques tridimensionnels qu'il y a d'objets radiographiés.

La modélisation peut être volumique. L'objet mono-matériau peut donc être représenté par des voxels dont la valeur représente une quantité de matériau. Le voxel peut être plein, partiellement plein ou vide de matériau (dans ce cas c'est de l'air). Le modèle géométrique volumique peut être analysé pour localiser les frontières de l'objet et ensuite pour mesurer des dimensions linéaires telles que des longueurs ou des épaisseurs. Il peut aussi être transformé en modèle surfacique, c'est-à-dire dans lequel sont modélisées des surfaces frontières de l'objet.

Il est possible d'obtenir un modèle surfacique directement à partir des images radiographiques c'est-à-dire sans passer par le calcul d'un modèle volumique.

Dans les modélisations surfaciques, un objet est défini par au moins une surface tridimensionnelle. Une surface tridimensionnelle correspond à la frontière entre la matière de l'objet et l'environnement extérieur (généralement l'air), ce qui permet d'appréhender les notions d'intérieur et d'extérieur de l'objet. Généralement, les surfaces tridimensionnelles se modélisent de plusieurs manières telles que par modélisation polygonale, par courbes ou surfaces paramétriques (cylindres, cônes, sphères, splines, ...) ou par subdivision de surfaces. A l'aide d'un maillage de polyèdres, par exemple des triangles, les surfaces tridimensionnelles des objets sont représentées par des ensembles de facettes planes connexes par leurs arêtes.

Une section d'un objet tridimensionnel est son intersection avec un plan. La section des surfaces tridimensionnelles sont des courbes bidimensionnelles dans le plan de section. La connaissance de ces courbes bidimensionnelles dans une succession de plans de coupe permet la reconstruction des surfaces tridimensionnelles.

Afin d'opérer des mesures de longueurs, il existe plusieurs approches.

Dans une première méthode volumique, il est possible de parcourir un modèle volumique suivant une droite ou un faisceau de droites et déterminer les voxels de frontière matière / air.

Dans une deuxième méthode surfacique, il est possible de calculer un segment dont les extrémités sont les intersections d'une droite avec la surface frontière matière/air d'un modèle surfacique. Les algorithmes résolvent assez bien les problèmes topologiques. Les points d'intersection sont uniques. Enfin, une méthode mixte consiste à transformer le modèle volumique en modèle surfacique, puis à appliquer la deuxième méthode.

Une troisième méthode consiste à déterminer dans un plan de coupe, la distance entre deux points d'une ou de deux courbes bidimensionnelles, toute courbe étant une frontière entre la matière et l'air.

Un point tridimensionnel est un point dont sont connues les coordonnées dans l'espace tridimensionnel, dans un repère quelconque.

Ces trois méthodes précédentes sont des exemples de détermination d'une distance entre deux points tridimensionnels, pour déterminer une mesure de dimension linéaire.

L'objectif de l'invention est de réaliser des mesures plus complètes que celles rendues possibles par de simples images radiographiques bidimensionnelles. En effet, il est aisé à l'aide d'un capteur d'images matricielles d'obtenir une image radiographique bidimensionnelle correspondant à une projection de la région inspectée et de mesurer des dimensions dans un plan orthogonal à la direction de projection dit « plan projeté ». De même, il est aisé à l'aide d'un capteur d'images linéaires d'obtenir une image radiographique bidimensionnelle correspondant à une projection en éventail (plans parallèles) de la région inspectée obtenue par juxtaposition des lignes d'image successives acquises durant le déplacement dans la direction de déplacement, et de mesurer des dimensions dans un plan projeté, qui est parallèle à la direction de déplacement. En revanche, selon l'invention, on peut mesurer des dimensions linéaires selon des directions qui ne sont ni contenues dans les plans projetés, ni parallèles aux plans projetés. Le procédé selon l'invention consiste en effet lors du traitement d'une combinaison des images radiographiques selon au moins trois directions de projection différentes, à reconstruire et mesurer des dimensions selon pratiquement toutes les directions. Ceci est possible par toute méthode permettant la détermination de points tridimensionnels dans l'espace appartenant à une surface frontière incluse dans la région à inspecter de l'objet. La reconstruction d'un modèle tridimensionnel de la région à inspecter, de type surfacique ou volumique ou à base de plans de coupe, est une méthode possible. En effet, selon l'invention on peut soit indirectement à partir d'un modèle surfacique ou volumique ou de plans de coupes, soit directement, déterminer au moins deux points tridimensionnels, voire de préférence des nuages de points tridimensionnels, répartis selon des directions non mesurables uniquement dans les images radiographiques bidimensionnelles.

Le modèle géométrique numérique est donc composé d'éléments géométriques tels que points, segments, surfaces, volumes élémentaires, calculés à partir des projections radiographiques, en considérant pour calculer chaque élément, l'atténuation d'au moins certains rayons X ayant traversés ce point sur l'objet réel, dans le but que le modèle géométrique numérique soit une représentation fidèle de la géométrie de l'objet réel, incluant des déformations par rapport à un objet idéal. Autrement dit, les coordonnées des éléments géométriques sont déterminées en considérant que lesdites coordonnées ont modifié les projections radiographiques, même lorsque ces éléments géométriques ne sont distinguables dans aucune des projections radiographiques 2D. Les mesures de dimensions sur le modèle géométrique numérique donnent donc des informations sur les dimensions de chaque objet modélisé, à partir d'éléments géométriques non distinguables dans aucune des projections radiographiques.

En conséquence, un avantage du procédé selon l'invention est qu'il consiste à déterminer, pour chaque objet, un modèle géométrique numérique constitué d'au moins deux points tridimensionnels chacun appartenant à une surface frontière de la région à inspecter et situés dans un plan non orthogonal à une direction de projection Dji, et non parallèle à la direction de déplacement.

Bien entendu, l'intérêt de la méthode est non seulement de fournir des mesures dans un plan non orthogonal à une direction de projection Dji, mais également de fournir un grand nombre de mesures distribuées dans la région inspectée, donc des dimensions dans de nombreuses directions, entre de multiples paires de points. De préférence, le modèle géométrique numérique est constitué :

- d'au moins deux points tridimensionnels de l'espace chacun appartenant à une surface frontière de la région à inspecter et situés dans un plan non orthogonal à une direction de projection Dji, et non parallèle à la direction T de déplacement ;

- d'au moins une surface tridimensionnelle de la région à inspecter, contenant des points n'appartenant pas à un plan orthogonal à une direction de projection Dji, et n'appartenant pas à un plan parallèle à la direction T de déplacement ;

- et/ou d'au moins une section de la région à inspecter, selon un plan différent d'un plan orthogonal à une direction de projection Dji et différente d'un plan parallèle à la direction de déplacement.

Le modèle géométrique a priori est un modèle numérique géométrique de la série d'objets, servant d'initialisation pour un logiciel de reconstruction afin de construire le modèle géométrique numérique de l'objet. Son rôle est principalement de fournir au système informatique, des informations sur la forme, la géométrie et les dimensions de l'objet à modéliser par le calcul.

Grace à ces informations il devient possible :

- de ne pas modéliser, à partir des images radiographiques, l'atténuation dans des régions de l'espace d'images vides de matériau a priori car l'atténuation y est considérée comme nulle ; et / ou
- de ne modéliser à partir des images radiographiques, que les surfaces sur lesquelles les mesures de dimensions sont à faire, éventuellement directement sans passer par la détermination de voxels ; et / ou
- de ne déterminer que des écarts entre les surfaces modélisées à partir des images radiographiques et des surfaces idéales théoriques.

Dans le cas d'objets mono-matériau, la connaissance du modèle géométrique a priori permet également de ne pas déterminer à partir des images radiographiques, de valeurs d'atténuation dans des régions de l'espace de l'image contenant de la matière selon le modèle a priori car elle est connue comme celle du matériau de fabrication de l'objet.

Toutefois il faut comprendre que selon l'invention, aucune mesure d'un objet n'est déduite d'une mesure sur le modèle géométrique a priori, puisque ce modèle est connu indépendamment dudit objet et représente un idéal théorique non réel.

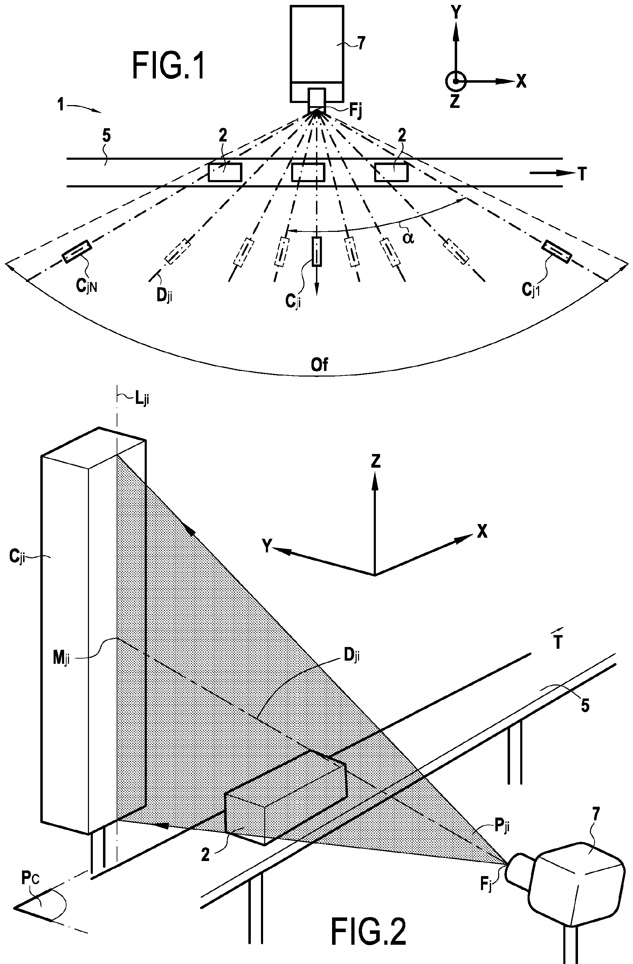

Tel que cela ressort des dessins et plus précisément des **Fig. 1** et **2,** l'objet de l'invention concerne une installation **1** permettant la mise en œuvre d'un procédé pour réaliser de manière automatique, des mesures de dimensions linéaires sur des objets manufacturés **2** se déplaçant en défilement à haute cadence. L'invention concerne un contrôle dit « en ligne » d'une série d'objets manufacturés, après une étape de transformation ou de fabrication, afin de contrôler la qualité des objets ou du procédé de transformation ou de fabrication.

Le procédé fonctionne pour une cadence de défilement d'un flux d'objets **2.** Idéalement, l'installation **1** est capable de traiter la production à la cadence de production, par exemple de 600 objets par minute.

Toutefois, la durée de calcul peut excéder l'intervalle entre deux objets. De même, les temps d'exposition des capteurs d'images et de lecture peuvent être trop longs. Si le flux le plus rapide ne peut pas être traité par une seule installation conforme à l'invention, alors plusieurs installations peuvent être mises en œuvre en parallèle contrôlant chacune une partie de la production. Ainsi il est possible de diviser le flux de production en deux ou trois flux parallèles inspectés par deux ou trois installations selon l'invention. Evidemment, l'intérêt économique de l'invention est atteint si le nombre de flux et donc d'installations selon l'invention reste faible.

L'invention apporte une amélioration considérable grâce à la mesure d'objets en défilement, en évitant le balayage hélicoïdal et le balayage sur plateau qui ne sont pas adaptés aux cadences de production car ces deux modalités impliquant une rotation relative des objets par rapport aux foyers et/ou aux capteurs créent une « rupture du défilement » ou un déplacement très lent des objets au sein de l'installation.

Le procédé selon l'invention assure la mesure sur chaque objet **2,** d'au moins une et de manière générale de plusieurs dimensions linéaires c'est-à-dire des longueurs. Une longueur est une mesure exprimée en unités de longueur par exemple pouce ou mètre et recouvre toutes les mesures de dimensions linéaires telles que par exemple diamètre, épaisseur, hauteur, longueur, largeur, profondeur, distance, coordonnée, périmètre des objets manufacturés. Au moins une mesure linéaire de la région inspectée est la distance entre au moins deux points tridimensionnels chacun appartenant à une surface frontière de la région à inspecter et situés dans un plan non orthogonal à une direction de projection **Dji.**

Selon l'invention, les objets **2** sont des objets identiques aux variations dimensionnelles près, formant une série d'objets. Autrement dit, une série est composée d'objets théoriquement identiques lorsqu'ils sont conformes. Le contrôle dimensionnel consiste à mesurer des dimensions réelles et à les comparer aux dimensions exigées. A priori, tout objet d'une série est proche d'un objet de référence idéal possédant les dimensions exigées mais s'en écarte par des variations dimensionnelles.

Selon une caractéristique avantageuse de réalisation, au moins une région de l'objet **2** est choisie pour être inspectée de manière à pouvoir réaliser des mesures de dimensions dans cette région de l'objet, correspondant à une caractéristique dimensionnelle de la région à inspecter. Au moins la région de l'objet dans laquelle la ou les dimensions linéaires sont à mesurer est inspectée par les rayons X. Ainsi, la région inspectée peut correspondre à la totalité de l'objet ou à une ou plusieurs régions de cet objet.

Comme indiqué, tous les objets **2** d'une série sont constitués par un matériau possédant un coefficient d'atténuation constant en tout point de chaque objet.

Selon une variante avantageuse de l'invention, ce coefficient est connu par le système informatique. Le procédé consiste donc à prévoir un moyen de mise à disposition pour le système informatique de la valeur du coefficient d'atténuation du matériau. Cette valeur peut être spectrale, non spectrale, voire rendue dépendante des réglages des sources de rayons X. La mise à disposition est possible par différents dispositifs de saisie, communication et mémoire. Par exemple, le dispositif de mise à disposition pour le système informatique, de la valeur du coefficient d'atténuation du matériau est une mémoire de masse, un réseau informatique filaire ou hertzien ou une interface homme/machine.

L'installation **1** comporte également un dispositif **5** de transport des objets **2** dans un plan de convoyage **Pc,** c'est-à-dire selon une trajectoire plane, avec une direction matérialisée par un vecteur **T** de déplacement. De préférence, la trajectoire est sensiblement rectiligne, mais une courbe ou un arc sont possibles. Classiquement, le dispositif de transport **5** est un convoyeur à bande transporteuse ou à chaînes assurant une translation linéaire des objets **2** qui y sont déposés. Ainsi, les objets **2** d'une même série sont en mouvement essentiellement de translation dans un plan de convoyage. Tel que cela ressort plus précisément des **Fig. 1** et **2,** la direction de déplacement des objets **2** s'établit selon un axe horizontal **X** d'un repère **X, Y, Z** comportant un axe vertical **Z** perpendiculaire à l'axe horizontal **X** et un axe transversal **Y** perpendiculaire à l'axe vertical **Z** et à l'axe horizontal **X,** et **X** et **Y** étant dans un plan parallèle au plan de convoyage **Pc** qui est de préférence, mais non nécessairement, horizontal.

La position des objets considérée dans un repère mobile orthonormé en translation selon la direction **T,** est fixe durant leur déplacement et l'acquisition des images radiographiques. Par exemple, les objets sont déposés sur le tapis de convoyeur, en appui stable, éventuellement sur un plan de pose propre comme le fond d'un récipient ou les pieds d'un siège.

Dans une variante de l'invention, il est possible de prévoir un support pour les objets **2.** Dans ce cas, ce support est fixe dans le repère mobile orthonormé, en translation selon la direction **T,** et il maintient l'objet également fixe dans le repère mobile orthonormé en translation selon la direction **T.** Pour que le support n'influence pas les mesures, selon une première variante il est exclu de la région inspectée pour ne pas apparaître en superposition de la région inspectée dans les projections. Selon une seconde variante, son coefficient d'atténuation est négligeable relativement à celui des objets et peut être assimilé à l'air ou à une atténuation nulle. Selon une troisième variante moins avantageuse, la géométrie du support, ainsi que sa position dans le repère mobile, sont précisément connues et répétables pour la série d'objets et son coefficient d'atténuation est connu précisément et stable, et préférablement identique à celui des objets de la série d'objets, pour que le support soit pris en compte dans la reconstruction et isolé du modèle géométrique de l'objet.

La position des objets étant stable (durant le défilement et l'acquisition des radiographies), il reste préférable que cette position dans le repère mobile orthonormé en translation selon la direction **T,** soit également la même pour chaque objet d'une série d'objets.

Si ce n'est pas le cas, il est alors possible selon une variante de l'invention, de mettre en œuvre un moyen de détermination de la position de chaque objet dans le repère mobile orthonormé en translation selon la direction **T** par rapport à un repère commun de l'installation, cette position étant prise en compte par les moyens de calcul du modèle géométrique numérique de la région à inspecter. Cette étape préliminaire consiste à déterminer la position de chaque objet, puis à mettre en correspondance dans un repère virtuel, le modèle géométrique a priori et les images. Cela revient dans tous les cas à calculer le modèle 3D des objets dans le repère mobile orthonormé en translation selon la direction **T.**

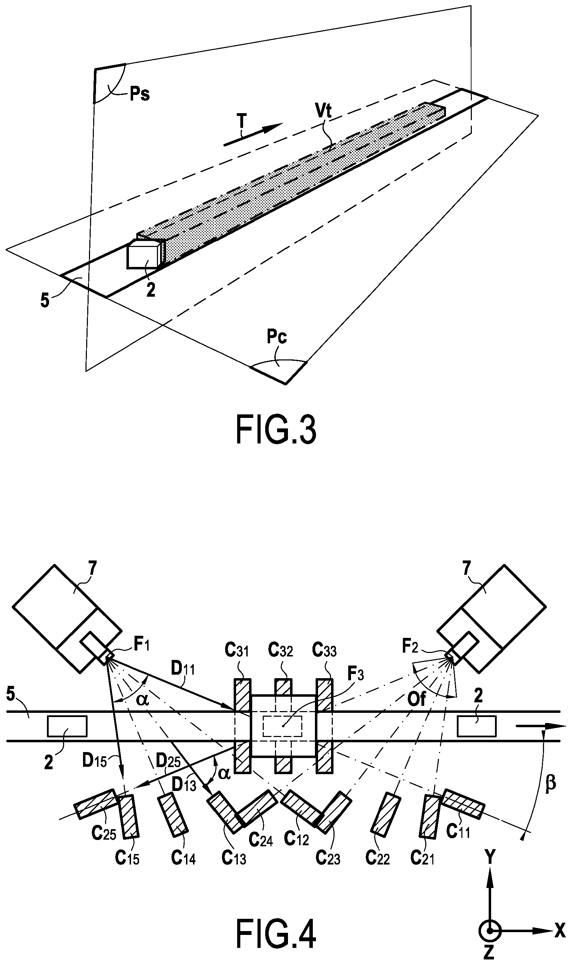

Tel que cela ressort plus précisément de la **Fig. 3,** au cours de leur déplacement en translation, les objets **2** génèrent ou traversent un volume dit de convoyage **Vt.** Le plan **Ps** est le plan sécant du volume de convoyage **Vt,** orthogonal au plan de convoyage **Pc** et parallèle à la direction de déplacement **T.** Par exemple, un plan médian sépare le volume en deux sous-volumes égaux. Le plan **Ps** est un plan vertical dans la mesure où le plan de convoyage est généralement horizontal.

L'installation **1** comporte également comme illustré aux **Fig. 1** et **2,** au moins un foyer **Fj** (avec j variant de 1 à k) d'un tube **7** générateur de rayons X créant un faisceau divergent de rayons X dirigé pour traverser le volume de convoyage **Vt** et plus précisément traverser au moins la région à inspecter de l'objet **2.** L'installation **1** comporte également au moins trois capteurs d'images **Cji** (avec i variant de 1 à N et N supérieur ou égal à 3) sensibles aux rayons X et situés de manière à être exposés aux rayons X issus d'un foyer **Fj** associé et ayant traversés le volume de convoyage **Vt** et plus précisément, au moins la région à inspecter de l'objet **2.** Bien entendu, le tube **7** et les capteurs d'images **Cji** sont situés en dehors du volume de convoyage **Vt** pour permettre le libre déplacement des objets dans ce volume. Classiquement, les tubes **7** générateurs de rayons X et les capteurs d'images **Cji** sont placés dans une enceinte étanche aux rayons X.

Les faisceaux de rayons X issus d'un foyer **Fj** associé audit capteur d'images **Cji,** traversent au moins la région inspectée, et forment sur le capteur d'images, la projection radiographique de la région inspectée, selon une direction de projection **Dji (Fig. 1** et **2).** La direction de projection **Dji** est la direction orientée du vecteur partant du foyer **Fj** pour passer par le centre **Mji** du capteur d'images **Cji.** Le ou les foyers **Fj** et les capteurs d'images **Cji** sont disposés de manière que chaque capteur d'images reçoive la projection radiographique de la région à inspecter selon une direction de projection de la région à inspecter.

L'installation **1** comporte également un système d'acquisition relié aux capteurs d'images **Cji,** de manière à acquérir pour chaque objet **2** au cours de son déplacement, au moins trois projections radiographiques de la région à inspecter présentant des directions différentes entre elles. Il est rappelé que la direction de projection associée à l'image radiographique obtenue est la direction partant du foyer et passant par le milieu de la zone de la surface sensible du capteur, au moment de l'acquisition de l'image. Ainsi, les au moins trois projections radiographiques ont des directions de projections qui font deux à deux, un angle entre-elles.

Le système d'acquisition est relié à un système informatique non représenté mais de tous types connus en soi. Selon une caractéristique avantageuse de réalisation, le système informatique enregistre à l'aide des capteurs d'image **Cji,** pour chaque objet de la série au cours de son déplacement, des images radiographiques issues d'un nombre déterminé de projections radiographiques de la région à inspecter selon des directions de projection différentes. Typiquement, le nombre de directions de projection **Dji** différentes est compris entre trois et quarante, et de préférence entre quatre et quinze. Selon une variante avantageuse de réalisation, l'installation **1** comporte entre trois et quarante capteurs d'images **Cji.** Selon une variante préférée de réalisation, l'installation **1** comporte entre quatre et quinze capteurs d'images **Cji.**

Comme cela sera expliqué en détail dans la suite de la description, le système informatique est programmé pour analyser, pour chaque objet, les au moins trois images radiographiques issues des au moins trois projections radiographiques de directions différentes de manière à construire un modèle géométrique numérique de chaque objet. Ce modèle géométrique numérique peut être réalisé de toute manière appropriée. Ainsi, le modèle géométrique numérique peut être constitué par au moins deux points tridimensionnels chacun appartenant à une surface frontière de la région à inspecter de l'objet et situés dans un plan non orthogonal à une direction de projection **Dji,** et non parallèle à la direction de déplacement **T.** Les au moins deux points peuvent appartenir à deux surfaces frontières différentes, par exemple pour mesurer une épaisseur ou un entrefer.

Le modèle géométrique numérique peut aussi être constitué d'une section de la région à inspecter selon un plan différent d'un plan orthogonal à une direction de projection **Dji,** et différent d'un plan parallèle à la direction **T** de déplacement. Par ailleurs, le modèle géométrique numérique peut être constitué par au moins une surface tridimensionnelle de la région à inspecter, différente d'un plan orthogonal à une direction de projection **Dji** et différente d'un plan parallèle à la direction de déplacement **T.**

Bien entendu, l'invention permet de construire un modèle géométrique numérique avec un grand nombre de points tridimensionnels, des nuages de points tridimensionnels ou des surfaces tridimensionnelles complexes.

Conformément à l'invention, le modèle géométrique numérique est construit en utilisant le coefficient d'atténuation du matériau des objets de la série et un modèle géométrique a priori de la région à inspecter pour la série d'objets. En d'autres termes, le système informatique utilise pour construire le modèle géométrique numérique de chaque objet, d'une part, le coefficient d'atténuation du matériau des objets et d'autre part, un modèle géométrique a priori de la région à inspecter pour la série d'objets.

Ainsi, le système informatique prend en compte le coefficient d'atténuation du matériau des objets en cours d'inspection pour cette opération de calcul. Avantageusement, l'installation **1** comporte un dispositif de mise à disposition pour le système informatique, du coefficient d'atténuation du matériau des objets d'une série.

Ce dispositif de mise à disposition peut être réalisé par une mémoire de masse, une interface homme machine ou par un réseau informatique filaire ou hertzien.

De même, le système informatique dispose d'un modèle géométrique dit a priori de la région à inspecter pour effectuer cette opération de calcul. Ainsi, l'installation **1** comporte un dispositif de mise à disposition pour le système informatique, d'un modèle géométrique a priori de la région à inspecter pour la série d'objets.

Le dispositif de mise à disposition pour le système informatique, d'un modèle géométrique a priori de la région à inspecter est une mémoire de masse, un réseau informatique filaire ou hertzien ou une interface homme machine.

Comme indiqué dans la partie définition, le modèle géométrique a priori est un modèle numérique de la série d'objets, servant d'initialisation pour le logiciel de reconstruction.

En l'absence de la connaissance du modèle géométrique a priori et de la propriété mono matériau des objets inspectés, la reconstruction est extrêmement coûteuse en calcul, car pour chaque point de l'espace 3D doit être calculée son atténuation. La présente invention permet ainsi de réaliser des mesures de dimensions linéaires sur des objets, avec une bonne précision, en un temps très court et à faible coût.

Selon une première variante de l'invention, le modèle géométrique a priori est obtenu par le modèle numérique de conception par ordinateur des objets de la série, réalisé lors de la conception (CAO 3D) des objets. Dans ce cas, il est mis à disposition du système informatique par différents moyens possibles, tels qu'une connexion à travers un réseau informatique, à une base de données contenant plusieurs modèles CAO correspondant aux diverses séries d'objets susceptibles d'être mesurées en production, une sélection par l'opérateur dans une base de données interne à l'installation, etc..

Selon une deuxième variante de l'invention, le modèle géométrique a priori est obtenu d'un modèle numérique géométrique construit à partir de la mesure d'un ou de plusieurs objets de la même série par un dispositif de mesure, par exemple par une machine à mesurer par palpeur ou un appareil de tomographie axiale dont il est rappelé la lenteur par rapport à l'invention. Le modèle géométrique a priori peut être construit par une fusion de mesures de plusieurs objets manufacturés de la même série.

Selon une troisième variante de l'invention, le modèle géométrique a priori est un modèle numérique géométrique généré par le système informatique à partir de valeurs saisies et/ou de dessins réalisés et/ou de formes sélectionnées par un opérateur sur l'interface homme-machine du système.

Par exemple, pour fournir le modèle géométrique a priori dans le cas d'un écrou à six pans extérieurs type normalisé M13, avec un trou fileté, la manière suivante est suffisante. L'opérateur saisit sur un clavier le nombre et la hauteur des pans, le diamètre et le pas de filetage, le système étant configuré pour inspecter des écrous métriques. Aucune côte précise supplémentaire n'est renseignée. Dans un autre exemple, pour l'inspection d'un récipient en polyéthylène, l'opérateur donne uniquement comme information que l'objet est un cylindre fermé au fond, surmonté d'un cône, deux diamètres, deux hauteurs et une épaisseur suffisent pour que le système informatique connaisse un modèle géométrique a priori de l'objet à inspecter. Selon un autre exemple, le système informatique peut par ses interfaces recevoir des descriptions techniques du modèle a priori comme un nombre, des diamètres, des profondeurs et des positions de divers alésages présents dans une surface qui feraient partie de la région à inspecter d'un objet plus grand. La description peut être géométrique par exemple si le système informatique reçoit le nombre et l'allure générale des surfaces permettant de le décrire, le nombre de cavités, le nombre de faces ou de côtés d'un polyèdre. En résumé, il faut comprendre que le modèle géométrique a priori doit au minimum contenir suffisamment d'informations techniques, géométriques, topologiques et/ou numériques, pour renseigner le système informatique sur la structure 3D de l'objet, le degré de détail et de précision de ces informations pouvant être très faible sans pénaliser la précision recherchée pour les mesures linéaires.

Le système informatique détermine pour chaque objet de la série, à partir du modèle géométrique numérique de la région à inspecter correspondant audit objet de la série, au moins une mesure linéaire de la région à inspecter selon une direction contenue dans un plan non orthogonal à une direction de projection.

Selon l'invention, une et généralement plusieurs dimensions sont contrôlées sur les objets **2.** L'objectif est généralement de comparer les mesures obtenues sur les objets avec des valeurs exigées, par exemple définies par un service qualité. Ces mesures de dimensions ou les écarts de ces mesures par rapport aux valeurs exigées peuvent être affichées, enregistrées, etc. Elles peuvent aussi servir à prendre des décisions de conformité des objets qui peuvent être triés automatiquement.

Les mesures peuvent être issues des mesures du modèle géométrique numérique de la région inspectée établi pour chaque objet. Par exemple, la région inspectée peut comporter un alésage. Dans le modèle géométrique numérique, il est possible de déterminer des mesures de diamètre ou de profondeur de l'alésage, en calculant sur le modèle géométrique numérique les distances entre des éléments de surface diamétralement opposés. L'objet étant mono-matériau, la détermination de la position des éléments de surface est précise.

Un autre moyen de déterminer des mesures de diamètre ou profondeur de l'alésage est la comparaison du modèle géométrique numérique de la région inspectée avec un modèle géométrique de référence ou théorique.

Le modèle géométrique de référence est un modèle idéal de la série des objets inspectés. Pour réaliser un contrôle dimensionnel, on peut comparer le modèle géométrique numérique de la région inspectée avec le modèle géométrique de référence, par un algorithme comprenant la mise en correspondance des modèles, puis la mesure des écarts entre les modèles. Le modèle géométrique de référence peut être issu de la CAO.

Il est ainsi possible de procéder à une opération de mise en correspondance du modèle géométrique numérique de la région inspectée avec le modèle géométrique de référence, puis de déterminer des écarts de dimension en mesurant des distances entre des éléments de surface appartenant au modèle de référence et des éléments de surface appartenant au modèle géométrique numérique. Dans l'exemple de la mesure de l'alésage, il est possible de positionner de manière virtuelle, un cylindre de diamètre maximum s'inscrivant dans la surface interne modélisée de l'alésage, et de même un cylindre de diamètre minimum contenant ladite surface interne modélisée, et de considérer comme mesures du diamètre de l'alésage dans la région inspectée, le diamètre de l'un et/ou l'autre des cylindres inscrit et exinscrit.

Selon une variante de l'invention, le modèle géométrique de référence et le modèle géométrique a priori sont le même modèle géométrique.

Selon une autre variante de l'invention, le modèle géométrique a priori est moins précis, moins complet et/ou est différent du modèle géométrique de référence.

Pour procéder à de telles mesures, l'installation comporte avantageusement, un dispositif de mise à disposition pour le système informatique, de valeurs de dimensions linéaires, et/ou de tolérances sur ces dimensions, et/ou de modèles géométriques de référence.

Selon une caractéristique avantageuse de réalisation, le système informatique est relié à un dispositif d'affichage des valeurs de mesures linéaires de la région à inspecter et/ou des écarts dimensionnels par rapport à des valeurs de référence, et/ou des écarts entre le modèle géométrique numérique de la région inspectée et un modèle géométrique de référence. Par exemple pour un écrou sont affichés des mesures telles qu'une profondeur de filet, un pas moyen de filet, un rayon de fond de filet moyen, une hauteur, un diamètre intérieur minimal ou maximal, une planéité d'une ou plusieurs de ses faces externes. Pour un récipient en plastique, le système affichera la hauteur totale et par exemple le diamètre minimal et le diamètre maximal de la partie cylindrique à une hauteur prédéfinie par le réglage des côtes à vérifier. Les côtes peuvent être affichées avec des couleurs différentes en fonction de leurs conformités ou non.

Selon une caractéristique avantageuse de réalisation, le système informatique est relié à un dispositif de tri des objets en fonction de la mesure linéaire de la région à inspecter. Ainsi, ce dispositif de tri peut éjecter du dispositif de transport, les objets considérés comme défectueux en considération des dimensions linéaires mesurées.

Selon une caractéristique avantageuse de réalisation, le système informatique est relié à un dispositif de marquage des objets en fonction de la mesure linéaire de la région à inspecter. Ce dispositif de marquage peut inscrire par exemple, les dimensions linéaires mesurées ou l'état conforme ou défectueux de l'objet.

Les positions relatives des foyers **Fj** et des capteurs **Cji** dans un repère fixe **X,Y,Z** de l'installation sont connues du système informatique. Cette position peut être obtenue par hypothèse ou par étalonnage. L'étalonnage consiste par exemple à placer ou convoyer dans l'installation un calibre usiné avec précision.

Bien entendu, les positions relatives des foyers **Fj** et des capteurs d'images **Cji** sont diverses en étant rappelé que les foyers **Fj** et les capteurs d'images **Cji** sont positionnés en dehors du volume de convoyage **Vt.**

Selon une variante de réalisation, l'installation **1** comporte un seul foyer **Fj = F1** disposé selon un côté du volume de convoyage **Vt** et une série de capteurs d'images **Cji = C1i = C11, C12, C13,** ... disposés selon le côté opposé du volume de convoyage **Vt** pour recevoir les rayons provenant du foyer **F1** et ayant traversés la région à inspecter. Dans cet exemple, le foyer présente une ouverture **Of** qui est mesurée dans au moins un plan quelconque, comme par exemple le plan **X,Y** dans la **Fig. 1,** qui est supérieure ou égale à 120°. Cette ouverture **Of** est considérée en sortie de foyer, dans le cas où l'installation comprend entre le foyer et le volume **Vt,** ou entre le volume **Vt** et les capteurs d'images, des écrans de limitation des faisceaux aux seuls faisceaux utiles, dans le but de réduire du diffusé.

Selon une autre variante de réalisation, au moins deux foyers **Fj** (F1 et F2) de production de rayons X, sont positionnés séparément en deux positions distinctes et au moins trois capteurs d'images **Cji,** sensibles aux rayons X sont placés de manière que chaque foyer est associé à au moins un capteur d'images **Cji,** et que chaque capteur d'images **Cji** est associé à un foyer et reçoit les rayons X issus dudit foyer et traversant la région à inspecter. Dans cet exemple, chaque foyer présente une ouverture supérieure ou égale à 60° de sorte que la somme des ouvertures des deux foyers est supérieure ou égale à 120°.

Dans l'exemple de réalisation illustré aux **Fig. 4 à 6,** l'installation **1** comporte trois foyers **F1, F2, F3** associés chacun à un tube **7** générateur distinct. L'installation **1** comporte aussi cinq capteurs d'images **C11, C12, C13, C14** et **C15** sensibles chacun aux rayons X issus du premier foyer associé **F1,** cinq capteurs d'images **C21, C22, C23, C24** et **C25** sensibles chacun aux rayons X issus du deuxième foyer associé **F2** et trois capteurs d'images **C31, C32, C33** sensibles chacun aux rayons X issus du troisième foyer associé **F3.**

Selon cet exemple de réalisation, il est à noter qu'au moins un foyer (**F1** et **F2** dans l'exemple) duquel est issu un faisceau de rayons X divergent est positionné d'un côté du plan sécant **Ps** de sorte que son faisceau traverse le plan sécant **Ps** et la région à inspecter, tandis qu'au moins un capteur d'images **Cji** associé audit foyer

**Fj** pour recevoir les rayons X issus dudit foyer **Fj** est disposé du côté opposé par rapport au plan sécant **Ps.** (Dans l'exemple, ce sont les cinq capteurs d'images **C11, C12, C13, C14** et **C15** sensibles chacun aux rayons X issus du foyer associé **F1** et les cinq capteurs d'images **C21, C22, C23, C24** et **C25** sensibles chacun aux rayons X issus du foyer associé **F2**).

Selon une variante avantageuse de réalisation qui est illustré aux **Fig. 4 à 6,** un foyer **Fj** duquel est issu un faisceau de rayons X divergent est disposé d'un côté du plan de convoyage **Pc** de sorte que son faisceau traverse le plan de convoyage **Pc,** tandis qu'au moins un capteur d'images **Cji** associé audit foyer **Fj** pour recevoir les rayons X issus dudit foyer est positionné du côté opposé par rapport au plan de convoyage Pc. Dans l'exemple illustré, un foyer **F3** est disposé au-dessus du plan de convoyage **Pc** tandis que trois capteurs d'images **C31, C32, C33** sont positionnés au-dessous du plan de convoyage **Pc.** Bien entendu, la position entre le foyer et les capteurs d'images peut être inversée par rapport au plan de convoyage.

Selon une variante avantageuse de réalisation, au moins l'un des foyers **Fj** est disposé dans le plan de convoyage **Pc.** De préférence, ces foyers coopèrent avec des capteurs d'images associés situés à leur opposé par rapport au plan sécant **Ps.** Ainsi dans le cas d'un transport des objets disposés sur un convoyeur plan, cette disposition permet que dans les images radiographiques, les projections des objets ne soient pas superposées à la projection du convoyeur. Ainsi, dans le modèle géométrique numérique des objets, la partie de l'objet en contact avec le convoyeur peut être déterminée précisément.

Selon une caractéristique avantageuse de réalisation, la disposition des capteurs d'images **Cji** et des foyers est telle que les rayons X issus du ou des foyers **Fj** et atteignant les capteurs d'images **Cji** traversent uniquement une région à inspecter à la fois. En d'autres termes, les rayons X ne traversent qu'un seul objet à la fois. Il est à noter que l'installation peut comporter un système pour contrôler l'espacement entre les objets successifs en défilement.

Un objet de l'invention est d'obtenir un procédé non seulement rapide, mais également peu coûteux, apte à calculer avec la précision nécessaire à un contrôle dimensionnel. L'invention vise à réduire le nombre d'images nécessaires à la reconstruction au nombre minimum permettant d'atteindre la précision dimensionnelle voulue. Par exemple, l'invention permet avec neuf projections et un nombre limité d'images de la région inspectée, de mesurer le diamètre interne d'un cylindre à +/- 0,05 mm. Avantageusement, l'installation conforme à l'invention comporte entre un et quatre foyers **Fj** et de préférence un ou deux foyers **Fj** et de préférence entre quatre et quinze capteurs d'images **Cji.**

Selon l'invention, il convient de disposer les capteurs d'images et le ou les foyers afin que la combinaison des au moins trois directions de projections optimise la détermination du modèle géométrique numérique de la région inspectée, en considérant qu'il faut laisser le volume traversé **Vt** libre pour la circulation des objets. Les règles ci-après sont avantageusement mises en œuvre dans le cadre de l'invention, ces règles étant valables pour des capteurs d'images linéaires ou matricielles.

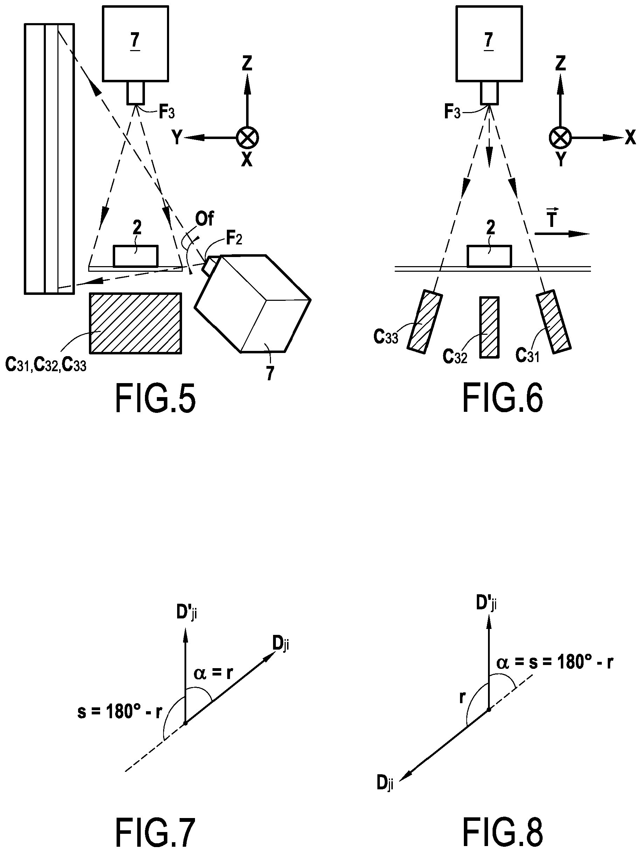

Dans ce qui suit, un angle est une valeur absolue. Les **Fig. 7** et **8** illustrent deux directions de projection **Dji** et **D'ji** qui sont aussi des vecteurs. Ces **Figures** font apparaître l'angle **r** entre ces deux directions de projection soit $r = (\overrightarrow{Dij}, \overrightarrow{D'ij})$ et **s** l'angle complémentaire à l'angle **r,** soit **s**= 180°-**r**. Par définition, l'angle utile α entre deux directions de projection différentes **Dji** et **D'ji,** est le plus petit des angles **r** et **s**, soit α = Min(**r, s**). Ainsi, l'angle utile α est le plus petit des angles formés par les deux droites portant les directions de projection **Dji, D'ji** et ramenées en tout point de la région inspectée.

Selon une variante avantageuse de l'invention, on acquiert pour chaque objet, au moins deux images issues de deux projections radiographiques selon deux directions différentes **Dji** et **D'ji** faisant entre elles un angle utile α supérieur ou égal à 45° et inférieur ou égal à 90°. Selon une variante avantageuse de réalisation, on acquiert pour chaque objet au moins deux images issues de deux projections radiographiques selon deux directions différentes faisant entre elles un angle utile α supérieur ou égal à 60° et inférieur ou égal à 90°.

Pour ce faire, l'installation **1** selon l'invention comporte au moins un foyer et deux capteurs d'images disposés de manière que les directions de projection de la région inspectée qu'ils reçoivent possèdent entre elles un angle utile α supérieur ou égal à 45° et inférieur ou égal à 90° et, avantageusement supérieur ou égal à 60° et inférieur ou égal à 90°.

Par exemple comme illustré à la **Fig. 4,** l'angle utile α entre les directions **D15** et **D11,** et entre les directions **D13** et **D25** sont supérieurs à 45°. Bien évidemment il doit être compris qu'au moins un angle utile est supérieur ou égal à 45° et inférieur ou égal à 90° et avantageusement qu'au moins un angle utile est supérieur ou égal à 60° et inférieur ou égal à 90° et les autres angles utiles entre deux directions **Dji, D'ji** sont quelconques. L'homme du métier à partir de cette règle saura rechercher une disposition qui offre une distribution la plus complète possible des directions de projections de la région inspectée.

Selon une autre caractéristique avantageuse, pour chaque objet, le système informatique acquiert au moins une image radiographique de la région inspectée correspondant à une direction de projection faisant un angle d'ouverture β déterminée avec la direction de déplacement **T.**

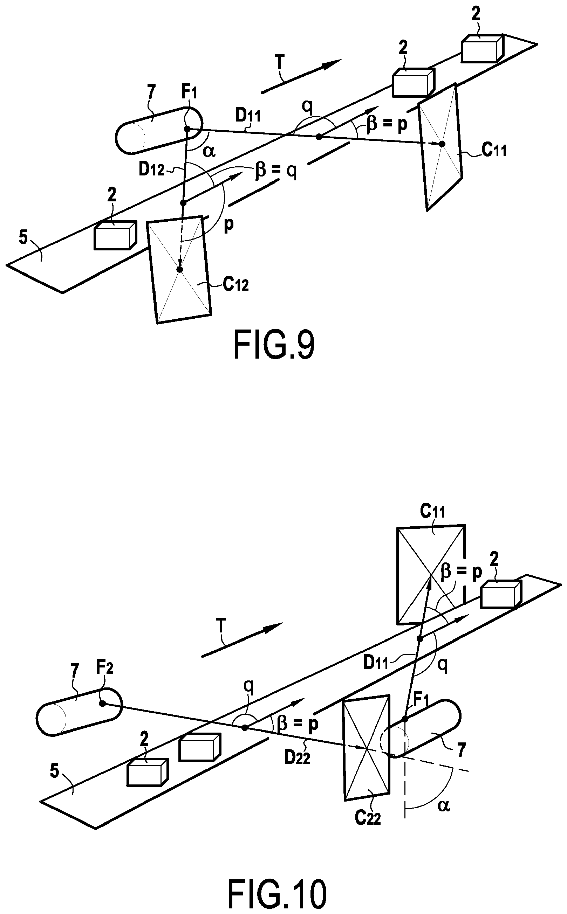

Comme illustré sur les **Fig. 9** et **10,** il est considéré l'angle **p** entre une direction de projection (vecteur **Dji**) et la trajectoire des objets (vecteur **T**), soit l'angle **p** = (**Dji, T**) c'est-à-dire **p** = (**D11, T**) et **p** = (**D12, T**) dans l'exemple illustré à la **Fig. 9** et **p** = (**D22, T**) et **p** = (**D11, T**) dans l'exemple illustré à la **Fig. 10.** L'angle **q** complémentaire à l'angle **p** est tel que **q**= 180°-**p**. Par définition, l'angle d'ouverture β entre une direction de projection **Dji** et la trajectoire **T** est le plus petit des angles **p** et **q**, à savoir β = **Min** (**p, q**). Ainsi, l'angle d'ouverture β est le plus petit des angles formés par les deux droites portant l'une la direction de projection **Dji** et l'autre la trajectoire **T**, ramenées en tout point de la région inspectée.

Selon une autre caractéristique avantageuse, pour chaque objet, le système informatique acquiert au moins une image radiographique de la région inspectée correspondant à une direction de projection **Dji** ayant avec la direction de déplacement **T**, un angle d'ouverture β compris entre 10° et 60°. En d'autres termes, l'installation selon l'invention comporte au moins un foyer et un capteur d'images **Cji** disposés de manière que, lorsqu'un objet traverse le champ des capteurs d'images, la direction de projection **Dji** de la région inspectée sur le capteur d'images **Cji** fait un angle d'ouverture β avec la direction de déplacement **T** compris entre 10° et 60°.

En d'autres termes, la configuration de l'installation **1** est optimisée pour réduire son encombrement dans la direction de déplacement tout en conservant un volume traversé **Vt** adapté aux objets et une bonne qualité de reconstruction.

En raison du volume traversé **Vt**, l'installation ne produit pas de projection autour de la direction de déplacement **T**. Le volume traversé **Vt** impose un angle beta minimum. Selon l'invention β min = 10°. Il n'y a aucun capteur disposé de manière à fournir une projection d'angle β inférieur à 10°.

Il faut déduire de ce qui précède que la répartition des angles de projections pour chaque objet n'est pas uniforme selon l'invention.

Comme illustré à la **Fig. 9,** la répartition des angles de projection présente une lacune, qu'on appelle une région d'angle mort, de deux fois 2 x 10° soit 20°, au lieu d'avoir une couverture complète sur 180°.

Par exemple comme illustré à la **Fig. 9,** une installation selon l'invention comporte au moins un foyer **F1** et deux capteurs d'images **C11, C12** dont les directions de projections **D11, D12** définissent avec la direction de déplacement **T**, un angle d'ouverture β compris entre 10° et 60° correspondant respectivement aux angles **p** et **q**. Dans l'exemple illustré à la **Fig. 10,** l'installation comporte au moins un capteur d'images **C11,** associé à un foyer **F1** et un capteur d'images **C22** associé à un foyer **F2**. Les directions de projections **D11, D22** définissent l'angle d'ouverture β compris entre 10° et 60° et correspondant aux angles **p.** De même, l'installation illustrée à la **Fig. 4,** comporte un capteur d'images **C11** associé au foyer **F1** et dont la direction de projection **D22** fait un angle β compris entre 10° et 60°, par rapport à la direction de déplacement **T**.

Les capteurs d'images **Cji** sont du type matriciel ou linéaire.

Selon une variante préférée de réalisation, l'installation **1** comporte des capteurs d'images linéaires. Selon cette variante préférée, chaque capteur d'images **Cji** comporte un réseau linéaire d'éléments sensibles aux rayons X, distribués selon une droite de support **Lji** définissant avec le foyer associé **Fj**, un plan de projection **Pji** contenant la direction de projection **Dji (Fig. 2)**. Ces capteurs d'images **Cji** sont disposés de manière qu'au moins m éléments sensibles de chacun de ces capteurs d'images reçoivent la projection radiographique de la région à inspecter par le faisceau de rayons X issu du foyer **Fj** associé, avec les plans de projection **Pji** pour les différents capteurs qui sont distincts entre eux et non parallèles au plan de convoyage **Pc**. Le nombre m d'éléments sensibles de chaque capteur d'images linéaires est supérieur à 128 de préférence supérieur à 512. La distance entre éléments sensibles voisins (appelée « pas » ou « pitch » en anglais) et/ou la dimension des éléments sensibles est de préférence inférieure à 800 $\mu$m. La fréquence de lecture des lignes d'images est de préférence supérieure à 100Hz, avantageusement supérieur à 1kHz. Bien entendu ces paramètres sont adaptés en fonction de la taille des objets, la précision recherchée et la vitesse de défilement.

Selon une caractéristique avantageuse de réalisation, au moins trois capteurs d'images **Cji** linéaires ont leurs droites de support **Lji** parallèles entre elles.

Selon une autre caractéristique avantageuse de réalisation, au moins trois capteurs d'images **Cji** linéaires ont leurs droites de support **Lji** orthogonales au plan de convoyage **Pc**.

Selon une variante, un foyer **Fj** est positionné afin que son faisceau traverse la région inspectée puis le plan de convoyage **Pc**. De plus, au moins un capteur d'images **Cji** linéaires associé est positionné opposé au foyer **Fj** par rapport au plan de convoyage **Pc** et de manière que sa droite support **Lji** soit parallèle au plan de convoyage **Pc**.

Selon ces variantes de réalisation avec des capteurs d'images linéaires, le système d'acquisition acquiert à l'aide de chacun des au moins trois capteurs d'images **Cji,** à chaque déplacement incrémental de chaque objet sur la trajectoire, des images linéaires radiographiques de la région à inspecter selon un nombre choisi afin que pour chaque objet, l'ensemble de la région à inspecter se trouve représentée complétement dans l'ensemble des images linéaires radiographiques. Ainsi, lors du déplacement d'un objet, chaque capteur d'images est apte à acquérir des images radiographiques linéaires de sorte que l'ensemble de la région à inspecter de l'objet se trouve représenté complétement dans l'ensemble des images linéaires radiographiques obtenues à partir dudit capteur d'images. Ainsi, pour chaque objet, il est obtenu au moins trois ensembles d'images linéaires radiographiques de la région à inspecter qui sont ensuite analysées. Il est possible de constituer des images radiographiques matricielles de la région inspectée, par juxtaposition des ensembles d'images linéaires radiographiques. Mais la reconstruction du modèle géométrique et la mesure ne l'imposent pas nécessairement.

Il est à noter que compte tenu du volume traversé **Vt**, aucune projection radiographique n'est acquise dans la région d'angle mort ($\beta < \pm 10°$) située de part et d'autre de la direction de déplacement **T**. Le procédé selon l'invention permet, malgré l'absence de projections radiographiques dans cet intervalle d'angles, de reconstruire, grâce au modèle géométrique a priori, un modèle géométrique numérique précis et complet de l'objet mono-matériau. Il est ainsi possible de réaliser des mesures de dimension linéaire sur tout le modèle géométrique numérique et en particulier selon des directions non orthogonales aux directions de projection possibles, y compris des mesures de dimension linéaire selon des directions de mesure orthogonales aux directions de projections manquantes correspondant à la région d'angle mort située de part et d'autre de la direction de déplacement **T**. En effet, sans le procédé selon l'invention, par exemple avec les méthodes destinées à la tomographie axiale « complètes » traditionnelles, dans le cas où aucune projection radiographique n'est acquise selon les directions d'un angle mort, alors le modèle reconstruit présente également dans un secteur angulaire orthogonal à l'angle mort, des erreurs de reconstruction rendant impossible de déterminer une surface précisément et donc rendant impossible tout mesure de dimension linéaire d'un objet mono-matériau.

Ainsi, comme illustres aux **Fig. 11** et **12,** selon l'invention aucune projection n'est possible dans un angle mort valant par exemple 20° ($\beta$ min = 10°). Selon l'art antérieur, aucune mesure précise ne pourrait être faite dans la direction **A**, qui n'est orthogonale à aucune des directions de projection. La direction **A** n'est proche de l'orthogonale d'aucune des directions de projection à au moins 10° près. Selon l'invention, grâce à la reconstruction à partir de modèles a priori de la série d'objets et de l'atténuation constante et uniforme, la mesure du diamètre intérieur selon la direction **A** (distance **a1**) et la mesure de la distance entre les deux pans extérieurs perpendiculaires à la direction **A** (distance **a2**) sont justes et précises. Autrement dit le modèle géométrique de la région à inspecter ne présente pas de frontières manquantes ou flous dans la direction **A**.

Bien entendu, le nombre de foyers, le nombre de capteurs d'images associés à chaque foyer, et leurs dispositions relatives sont choisis de toute manière appropriée en fonction du degré de précision de mesure souhaité, de la forme des objets et de leur espacement sur le convoyeur.

Il est à noter que dans une fabrication industrielle en série, il est possible que plusieurs séries soient présentes en même temps sur une même ligne de fabrication ou de contrôle. Dans ce cas, l'installation comporte un système d'indication au système informatique de la série à laquelle appartient chacun des objets afin de mettre en œuvre le procédé de l'invention à tous les objets d'une même série. En effet l'installation selon l'invention peut être employée pour inspecter un flux d'objets manufacturés composé de plusieurs séries d'objets différentes, par exemple une première série et une deuxième série. Les séries peuvent différer par la forme des objets mono-matériau ou par le coefficient d'atténuation propre ou bien les deux. Dans ce cas, il faut munir l'installation d'un moyen pour mettre à disposition du système informatique, un modèle géométrie a priori de chaque série d'objets, un coefficient d'atténuation de chaque série d'objets et il faut prévoir un moyen d'associer dans le système informatique, les images radiographiques de chaque objet avec la série à laquelle il appartient.

**Revendications**

1. Procédé de mesure automatique de dimensions linéaires d'objets manufacturés **(2)** d'une série consistant à :

   - choisir une série d'objets manufacturés **(2)** dans laquelle chacun desdits objets est constitué d'un matériau avec un coefficient d'atténuation constant en tout point de l'objet ;
   - choisir au moins une région à inspecter des objets dans laquelle au moins une dimension linéaire est à mesurer ;
   - transporter, au moyen d'un dispositif de transport, les objets en mouvement dans une direction **(T)** de déplacement selon une trajectoire sensiblement rectiligne dans un plan de convoyage (**Pc**), ces objets engendrant un volume de convoyage **(Vt)** au cours de leur déplacement ;
   - positionner, hors du volume de convoyage **(Vt)**, au moins un foyer **(Fj)** d'un tube générateur de rayons X et des capteurs d'images **(Cji)** exposés et sensibles chacun aux rayons X issus d'un foyer associé (**Fj**), ces rayons X ayant traversés au moins la région à inspecter produisant sur chaque capteur d'images une projection radiographique selon la direction de projection **(Dji)** ;
   - acquérir à l'aide des capteurs d'images (**Cji**), pour chaque objet au cours de son déplacement, au moins trois images radiographiques de la région à inspecter, obtenues d'au moins trois projections radiographiques de la région à inspecter dont les directions de projection **(Dji)** sont différentes entre elles ;
   - analyser les au moins trois images radiographiques, à l'aide d'un système informatique ;
   - mettre à la disposition du système informatique, un modèle géométrique a priori de la région à inspecter pour la série d'objets ;
   - déterminer à l'aide du système informatique en considérant un coefficient d'atténuation constant et à partir du modèle géométrique a priori et d'au moins trois images radiographiques de la région à inspecter, un modèle géométrique numérique de la région à inspecter pour chaque objet de la série constitué d'au moins deux points tridimensionnels chacun appartenant à une surface frontière de la région à inspecter et situés dans un plan non orthogonal à une direction de projection **Dji** ;
   - pour chaque objet de la série, déterminer à partir du modèle géométrique numérique de la région à inspecter, au moins une mesure de dimension linéaire de la région à inspecter comme étant la distance entre au moins deux points tridimensionnels chacun appartenant à une surface frontière de la région à inspecter et situés dans un plan non orthogonal à une direction de projection **(Dji).**

2. Procédé selon la revendication 1, **caractérisé en ce qu'**il consiste à déterminer un modèle géométrique numérique constitué par :

   - au moins deux points tridimensionnels de l'espace chacun appartenant à une surface frontière de la région à inspecter et situés dans un plan non orthogonal à une direction de projection (**Dji**), et non parallèle à la direction (**T**) de déplacement ;
   - et/ou au moins une surface tridimensionnelle de la région à inspecter contenant des points n'appartenant pas à un plan orthogonal à une direction de projection (**Dji**), et n'appartenant pas à un plan parallèle à la direction (**T**) de déplacement ;
   - et/ou au moins une section de la région à inspecter, selon un plan différent d'un plan orthogonal à une direction de projection (**Dji**) et différent d'un plan parallèle à la direction (**T**) de déplacement.

3. Procédé selon l'une des revendications précédentes, **caractérisé en ce qu'**il consiste à mettre à la disposition du système informatique la valeur du coefficient d'atténuation constant.

4. Procédé selon l'une des revendications précédentes, **caractérisé en ce qu'**il consiste à mettre à la disposition du système informatique, le modèle géométrique a priori de la région à inspecter de la série, obtenu par :

   - le modèle numérique de conception par ordinateur des objets de la série ;
   - ou le modèle numérique géométrique obtenu à partir de la mesure d'un ou de plusieurs objets de la même série par un dispositif de mesure ;
   - ou le modèle numérique géométrique généré par le système informatique à partir de valeurs saisies et/ou de dessins réalisés et/ou de formes sélectionnées par un opérateur sur une interface homme machine du système informatique.

5. Procédé selon l'une des revendications précédentes, **caractérisé en ce qu'**il consiste à n'acquérir à l'aide des capteurs d'image **(Cji)**, pour chaque objet de la série au cours de son déplacement, aucune image radiographique de la région inspectée correspondant à une direction de projection **(Dji)** ayant un angle d'ouverture (β) avec la direction de déplacement (T) inférieur à 10°.

6. Procédé selon l'une des revendications précédentes, **caractérisé en ce qu'**il consiste à réaliser et acquérir des projections radiographiques de la région inspectée d'un objet de manière que les rayons X issus du ou des foyers et atteignant les capteurs d'images **(Cji)** ne traversent pas d'autre objet.

7. Procédé selon l'une des revendications précédentes, **caractérisé en ce que** :

   - les capteurs d'images **(Cji)** sont de type linéaire comportant chacun un réseau linéaire d'éléments sensibles aux rayons X, distribués selon une droite de support **(Lji)** définissant avec le foyer associé **(Fj)**, un plan de projection **(Pji)** contenant la direction de projection **(Dji)**, ces capteurs d'images étant disposés de manière que :
   - au moins m éléments sensibles de chacun de ces capteurs d'images reçoivent la projection radiographique de la région à inspecter par le faisceau de rayons X issu du foyer **(Fj)** associé ;
   - les plans de projection **(Pji)** pour les différents capteurs sont distincts entre eux et non parallèles au plan de convoyage **(Pc)** ;
   - on acquiert à l'aide de chacun des au moins trois capteurs d'images **(Cji)** linéaires, à chaque déplacement incrémental de chaque récipient selon la trajectoire **(T)**, des images linéaires radiographiques de la région à inspecter selon un nombre choisi afin que pour chaque objet, l'ensemble de la région à inspecter se trouve représentée complètement dans l'ensemble des images linéaires radiographiques ;
   - on analyse pour chaque objet, les au moins trois ensembles d'images linéaires radiographiques de la région à inspecter.

8. Installation de mesure automatique de dimensions linéaires d'au moins une région à inspecter d'objets manufacturés d'une série, l'installation comportant :

   - un dispositif de transport des objets dans une direction matérialisée par un vecteur **(T)** de déplacement, selon une trajectoire sensiblement rectiligne dans un plan de convoyage **(Pc)**, les objets parcourant un volume de convoyage **(Vt)** étendu dans la direction **(T)** ;
   - au moins un foyer **(Fj)** d'un tube générateur de rayons X situé en dehors du volume traversé **(Vt),** et créant un faisceau divergent de rayons X dirigé pour traverser au moins une région à inspecter de l'objet ;
   - au moins trois capteurs d'images **(Cji)**, situés en dehors du volume de convoyage **(Vt),** de manière à recevoir des rayons X issus d'un foyer **(Fj)** associé, le ou les foyers **(Fj)** et les capteurs d'images **(Cji)** étant disposés de manière que chaque capteur d'images reçoive la projection radiographique de la région à inspecter par les rayons issus du foyer **(Fj)** lorsque l'objet traverse ces rayons, les directions de projection de ces projections radiographiques étant différentes entre elles ;
   - un système d'acquisition relié aux capteurs d'images **(Cji)**, de manière à acquérir pour chaque objet au cours de son déplacement, au moins trois projections radiographiques de la région à inspecter avec des directions de projection **(Dij)** toutes différentes ;
   - un dispositif de mise à disposition pour un système informatique, d'un modèle géométrique a priori de la région à inspecter pour la série d'objets ; le système informatique :

     • déterminant un modèle géométrique numérique pour chaque objet de la série constitué d'au moins deux points tridimensionnels chacun appartenant à une surface frontière de la région à inspecter et situés dans un plan non orthogonal à une direction de projection **(Dji)**, en considérant un coefficient d'atténuation constant du matériau pour les objets, à partir du modèle géométrique a priori et d'au moins trois projections radiographiques de la région à inspecter ;
     • déterminant pour chaque objet de la série, à partir du modèle géométrique numérique de la région à inspecter, au moins une mesure linéaire de la région à inspecter comme étant la distance entre au moins deux points tridimensionnels chacun appartenant à une surface frontière de la région à inspecter et situés dans un plan non orthogonal de projection **(Dji).**

9. Installation selon la revendication 8, **caractérisée en ce qu'**elle comprend un dispositif de mise à disposition pour le système informatique, de valeurs et/ou de tolérances pour les dimensions linéaires exigées, et/ou d'au moins un modèle géométrique de référence.

10. Installation selon l'une des revendications 8 ou 9, **caractérisée en ce qu'**elle comporte au moins deux foyers (**F1**, **F2**) de production de rayons X, positionnés séparément en deux positions distinctes et au moins trois capteurs d'images (**Cji**), sensibles aux rayons X et positionnés de manière que :

- chaque foyer émet son faisceau à travers au moins la région à inspecter pour atteindre au moins un capteur (**Cji**) associé ;
- chaque capteur (**Cji**) est associé à un foyer et reçoit les rayons X issus dudit foyer après avoir traversé la région à inspecter.

**11.** Installation selon l'une des revendications 8 ou 9, **caractérisé en ce qu'**elle comporte, au moins un foyer duquel est issu un faisceau de rayons X divergent d'ouverture supérieure ou égale à 120° ou au moins deux foyers desquels sont issus des faisceaux de rayons X divergents dont la somme des ouvertures est supérieure ou égale à 120°.

**12.** Installation selon l'une des revendications 8 à 11, **caractérisée en ce qu'**elle comporte au moins un foyer disposé dans le plan de convoyage (**Pc**).

**13.** Installation selon l'une des revendications 8 à 12, **caractérisée en ce qu'**elle comporte :

- d'un côté d'un plan sécant (**Ps**) au volume de convoyage et orthogonal au plan de convoyage (**Pc**), un foyer (**Fj**) duquel est issu un faisceau de rayons X divergent, de sorte que son faisceau traverse le plan sécant (**Ps**) et la région à inspecter ;
- du côté opposé par rapport au plan sécant (**Ps**), au moins un capteur d'images (**Cji**) associé audit foyer (**Fj**) pour recevoir les rayons X issus dudit foyer (**Fj**).

**14.** Installation selon l'une des revendications 8 à 13, **caractérisée en ce qu'**elle comporte :

- d'un côté du plan de convoyage (**Pc**), un foyer (**Fj**) duquel est issu un faisceau de rayons X divergent, de sorte que son faisceau traverse le plan de convoyage (Pc) ;
- du côté opposé par rapport au plan de convoyage (**Pc**), au moins un capteur d'images (**Cji**) associé audit foyer (**Fj**) pour recevoir les rayons X issus dudit foyer (**Fj**).

**15.** Installation selon l'une des revendications 8 à 14, **caractérisée en ce qu'**au moins un foyer et deux capteurs d'images sont disposés de manière que les directions de projection de la région inspectée qu'ils reçoivent possèdent entre elles un angle utile (α) supérieur ou égal à 45° et inférieur ou égal à 90° et, avantageusement supérieur ou égal à 60° et inférieur ou égal à 90°.

**16.** Installation selon l'une des revendications 8 à 15, **caractérisée en ce qu'**au moins un foyer et un capteur d'images (**Cji**) sont disposés de manière que, lorsqu'un objet traverse le champ des capteurs, la direction de projection (**Dji**) de la région inspectée sur le capteur d'images (**Cji**) fait un angle d'ouverture (β) avec la direction de déplacement (**T**) compris entre 10° et 60°.

**17.** Installation selon l'une des revendications 8 à 16, **caractérisée en ce que**, aucun foyer (**Fj**) d'un tube générateur de rayons X n'étant situé dans le volume traversé (**Vt),** aucun capteurs d'images (**Cji**), n'étant situé dans le volume de convoyage (**Vt),** lorsqu'un objet traverse le champ des capteurs, la direction de projection (**Dji**) de la région inspectée sur le capteur d'images (**Cji**) ne fait jamais un angle d'ouverture (β) avec la direction de déplacement (**T**) inférieur à 10°.

**18.** Installation selon l'une des revendications 8 à 17, **caractérisée en ce que** le nombre et la disposition des capteurs d'images (**Cji**) et des foyers associés, sont tels que pour chaque objet de la série au cours de son déplacement, les projections radiographiques de la région à inspecter sur les capteurs d'images présentent entre quatre et quinze directions de projection différentes.

**19.** Installation selon l'une des revendications 8 à 18, **caractérisée en ce que** :

- les capteurs d'images (**Cji**) sont de type linéaire et comportent chacun un réseau linéaire d'éléments sensibles aux rayons X, distribués selon une droite de support (**Lji**) définissant avec le foyer associé (**Fj**), un plan de projection (**Pji**) contenant la direction de projection (**Dji**), ces capteurs d'images étant disposés de manière que :

• au moins m éléments sensibles de chacun de ces capteurs d'images reçoivent la projection radiographique de la région à inspecter par le faisceau de rayons X issu du foyer (**Fj**) associé ;
• les plans de projection (**Pji**) pour les différents capteurs sont distincts entre eux et non parallèles au plan de convoyage (**Pc**).

**20.** Installation selon la revendication 19, **caractérisée en ce qu'**au moins trois capteurs d'images (**Cji**) linéaires ont leurs droites de support (**Lji**) parallèles entre elles.

**21.** Installation selon l'une des revendications 19 et 20, **caractérisée en ce que** au moins trois capteurs d'images **(Cji)** linéaires ont leurs droites de support **(Lji)** orthogonales au plan de convoyage **(Pc).**

## Patentansprüche

1. Verfahren zur automatischen Messung linearer Abmessungen von hergestellten Gegenständen (2) einer Serie, bestehend aus:

   - Auswählen einer Serie von hergestellten Gegenständen (2), in der jeder der Gegenstände aus einem Material mit einem an jedem Punkt des Gegenstands konstanten Dämpfungskoeffizienten gebildet ist,
   - Auswählen mindestens einer zu untersuchenden Region der Gegenstände, in der mindestens eine lineare Abmessung zu messen ist,
   - mittels einer Transportvorrichtung, Transportieren der Gegenstände in Bewegung in einer Verlagerungsrichtung (T) entlang einer im Wesentlichen geraden Bahn in einer Beförderungsebene (Pc), wobei diese Gegenstände im Laufe ihrer Verlagerung ein Beförderungsvolumen (Vt) beschreiben,
   - Positionieren mindestens eines Brennflecks (Fj) einer Röntgenstrahl-Erzeugungsröhre und von Bildsensoren (Cji), die jeweils den aus einem zugehörigen Brennfleck (Fj) stammenden Röntgenstrahlen ausgesetzt werden und ihnen gegenüber empfindlich sind, außerhalb des Beförderungsvolumens (Vt), wobei diese Röntgenstrahlen mindestens die zu untersuchende Region durchquert haben, wobei auf jedem Bildsensor eine Röntgenprojektion entlang der Projektionsrichtung (Dji) produziert wird,
   - mittels der Bildsensoren (Cji), für jeden Gegenstand im Laufe seiner Verlagerung, Erfassen von mindestens drei Röntgenbildern der zu untersuchenden Region, die von mindestens drei Röntgenprojektionen der zu untersuchenden Region erhalten werden, deren Projektionsrichtungen (Dji) sich voneinander unterscheiden,
   - Analysieren der mindestens drei Röntgenbilder mittels eines Informatiksystems,
   - Zurverfügungstellen eines grundlegenden geometrischen Modells der zu untersuchenden Region für die Serie von Gegenständen für das Informatiksystem,
   - mittels des Informatiksystems, Bestimmen, unter Berücksichtigung eines konstanten Dämpfungskoeffizienten und ausgehend von dem grundlegenden geometrischen Modell und von mindestens drei Röntgenbildern der zu untersuchenden Region, eines digitalen geometrischen Modells der zu untersuchenden Region für jeden Gegenstand der Serie, das aus mindestens zwei dreidimensionalen Punkten besteht, die jeweils zu einer Grenzoberfläche der zu untersuchenden Region gehören und sich in einer Ebene befinden, die nicht orthogonal zu einer Projektionsrichtung Dji ist,

   - für jeden Gegenstand der Serie, ausgehend von dem digitalen geometrischen Modell der zu untersuchenden Region, Bestimmen mindestens einer Messung mit linearer Abmessung der zu untersuchenden Region als den Abstand zwischen mindestens zwei dreidimensionalen Punkten, die jeweils zu einer Grenzoberfläche der zu untersuchenden Region gehören und sich in einer Ebene befinden, die nicht orthogonal zu einer Projektionsrichtung (Dji) ist.

2. Verfahren nach Anspruch 1, **dadurch gekennzeichnet, dass** es darin besteht, ein digitales geometrisches Modell zu bestimmen, das gebildet ist aus:

   - mindestens zwei dreidimensionalen Punkten des Raumes, die jeweils zu einer Grenzoberfläche der zu untersuchenden Region gehören und sich in einer Ebene befinden, die nicht orthogonal zu einer Projektionsrichtung (Dji) und nicht parallel zur Verlagerungsrichtung (T) ist,
   - und/oder mindestens einer dreidimensionalen Oberfläche der zu untersuchenden Region, die Punkte enthält, die nicht zu einer Ebene gehören, die orthogonal zu einer Projektionsrichtung (Dji) ist, und nicht zu einer Ebene gehören, die parallel zur Verlagerungsrichtung (T) ist,
   - und/oder mindestens einer Sektion der zu untersuchenden Region entlang einer Ebene, die sich von einer Ebene unterscheidet, die orthogonal zu einer Projektionsrichtung (Dji) ist, und sich von einer Ebene unterscheidet, die parallel zur Verlagerungsrichtung (T) ist.

3. Verfahren nach einem der vorhergehenden Ansprüche, **dadurch gekennzeichnet, dass** es darin besteht, dem Informatiksystem den Wert des konstanten Dämpfungskoeffizienten zur Verfügung zu stellen.

4. Verfahren nach einem der vorhergehenden Ansprüche, **dadurch gekennzeichnet, dass** es darin besteht, dem Informatiksystem das grundlegende geometrische Modell der zu untersuchenden Region der Serie zur Verfügung zu stellen, das erhalten wird durch:

   - das digitale Modell des rechnergestützten Entwurfs der Gegenstände der Serie,
   - oder das geometrische digitale Modell, das ausgehend von der Messung eines oder mehrerer Gegenstände der gleichen Serie durch eine Messvorrichtung erhalten wird,

- oder das geometrische digitale Modell, das von dem Informatiksystem ausgehend von durch einen Bediener auf einer Mensch-Maschine-Schnittstelle des Informatiksystems erfassten Werten und/oder ausgeführten Zeichnungen und/oder ausgewählten Formen erzeugt wird.

5. Verfahren nach einem der vorhergehenden Ansprüche, **dadurch gekennzeichnet, dass** es darin besteht, mittels der Bildsensoren (Cji) für jeden Gegenstand der Serie im Laufe seiner Verlagerung kein Röntgenbild der untersuchten Region zu erfassen, die einer Projektionsrichtung (Dji) entspricht, die einen Öffnungswinkel (β) mit der Verlagerungsrichtung (T) von kleiner als 10° aufweist.

6. Verfahren nach einem der vorhergehenden Ansprüche, **dadurch gekennzeichnet, dass** es darin besteht, Röntgenprojektionen der untersuchten Region eines Gegenstands derart auszuführen und zu erfassen, dass die Röntgenstrahlen, die von dem oder den Brennflecken stammen und die Bildsensoren (Cji) erreichen, keinen anderen Gegenstand durchqueren.

7. Verfahren nach einem der vorhergehenden Ansprüche, **dadurch gekennzeichnet, dass**:

- die Bildsensoren (Cji) vom linearen Typ sind, die jeweils ein lineares Netz von gegenüber Röntgenstrahlen empfindlichen Elementen umfassen, die entlang einer Unterstützungsgeraden (Lji) verteilt sind, die mit dem zugehörigen Brennfleck (Fj) eine Projektionsebene (Pji) definiert, die die Projektionsrichtung (Dji) enthält, wobei diese Bildsensoren derart angeordnet sind, dass:
- mindestens m empfindliche Elemente von jedem dieser Bildsensoren die Röntgenprojektion der Region empfangen, die durch das Röntgenstrahlbündel zu untersuchen ist, das von dem zugehörigen Brennfleck (Fj) stammt,
- die Projektionsebenen (Pji) für die verschiedenen Sensoren sich voneinander unterscheiden und nicht parallel zur Beförderungsebene (Pc) sind,
- mittels jedes der mindestens drei linearen Bildsensoren (Cji), bei jeder inkrementellen Verlagerung von jedem Behälter entlang der Bahn (T), lineare Röntgenbilder der zu untersuchenden Region gemäß einer Anzahl erfasst werden, die gewählt wird, damit für jeden Gegenstand die gesamte zu untersuchende Region vollständig in der Menge linearer Röntgenbilder dargestellt wird,
- für jeden Gegenstand die mindestens drei Mengen linearer Röntgenbilder der zu untersuchenden Region analysiert werden.

8. Installation zur automatischen Messung linearer Abmessungen mindestens einer zu untersuchenden Region von hergestellten Gegenständen einer Serie, wobei die Installation umfasst:

- eine Vorrichtung zum Transport der Gegenstände in einer durch einen Verlagerungsvektor (T) dargestellten Richtung entlang einer im Wesentlichen geraden Bahn in einer Beförderungsebene (Pc), wobei die Gegenstände ein Beförderungsvolumen (Vt) durchlaufen, das sich in der Richtung (T) erstreckt,
- mindestens einen Brennfleck (Fj) einer Röntgenstrahl-Erzeugungsröhre, der sich außerhalb des durchquerten Volumens (Vt) befindet und ein divergierendes Röntgenstrahlbündel schafft, das gerichtet wird, um mindestens eine zu untersuchende Region des Gegenstands zu durchqueren,
- mindestens drei Bildsensoren (Cji), die sich außerhalb des Beförderungsvolumens (Vt) befinden, derart, dass Röntgenstrahlen, die von einem zugehörigen Brennfleck (Fj) stammen, empfangen werden, wobei der oder die Brennflecke (Fj) und die Bildsensoren (Cji) derart angeordnet sind, dass jeder Bildsensor die Röntgenprojektion der durch die von dem Brennfleck (Fj) stammenden Strahlen zu untersuchenden Region empfängt, wenn der Gegenstand diese Strahlen durchquert, wobei die Projektionsrichtungen dieser Röntgenprojektionen sich voneinander unterscheiden,
- ein Erfassungssystem, das mit den Bildsensoren (Cji) verbunden ist, derart, dass für jeden Gegenstand im Laufe seiner Verlagerung mindestens drei Röntgenprojektionen der zu untersuchenden Region mit vollkommen unterschiedlichen Projektionsrichtungen (Dji) erfasst werden,
- eine Vorrichtung zur Zurverfügungstellung eines grundlegenden geometrischen Modells der zu untersuchenden Region für die Serie von Gegenständen für ein Informatiksystem, wobei das Informatiksystem:

• ein digitales geometrisches Modell für jeden Gegenstand der Serie, das aus mindestens zwei dreidimensionalen Punkten gebildet ist, die jeweils zu einer Grenzoberfläche der zu untersuchenden Region gehören und sich in einer Ebene befinden, die nicht orthogonal zu einer Projektionsrichtung (Dji) ist, unter Berücksichtigung eines konstanten Dämpfungskoeffizienten des Materials für die Gegenstände ausgehend von dem grundlegenden geometrischen Modell und von mindestens drei Röntgenprojektionen der zu untersuchenden Region bestimmt,
• für jeden Gegenstand der Serie ausgehend von dem digitalen geometrischen Modell der zu untersuchenden Region mindestens eine lineare Messung der zu untersuchenden Region als den Abstand zwischen mindestens zwei dreidimensionalen Punkten bestimmt, die jeweils zu einer Grenzoberfläche der zu untersuchenden Region gehören und sich in einer nicht orthogonalen Projektionsebene (Dji) befinden.

9. Installation nach Anspruch 8, **dadurch gekennzeichnet, dass** sie eine Vorrichtung zur Zurverfügungstellung von Werten und/oder Toleranzen für die geforderten linearen Abmessungen und/oder mindestens eines geometrischen Bezugsmodells für das Informatiksystem umfasst.

10. Installation nach einem der Ansprüche 8 oder 9, **dadurch gekennzeichnet, dass** sie mindestens zwei Brennflecke (F1, F2) zur Produktion von Röntgenstrahlen, die getrennt an zwei verschiedenen Positionen positioniert sind, und mindestens drei Bildsensoren (Cji) umfasst, die gegenüber Röntgenstrahlen empfindlich sind und derart positioniert sind, dass:

   - jeder Brennfleck sein Bündel durch mindestens die zu untersuchende Region emittiert, um mindestens einen zugehörigen Sensor (Cji) zu erreichen,
   - jeder Sensor (Cji) einem Brennfleck zugehörig ist und die Röntgenstrahlen, die von dem Brennfleck stammen, empfängt, nachdem sie die zu untersuchende Region durchquert haben.

11. Installation nach einem der Ansprüche 8 oder 9, **dadurch gekennzeichnet, dass** sie mindestens einen Brennfleck, von dem ein divergierendes Röntgenstrahlbündel mit einer Öffnung von größer oder gleich 120° stammt, oder mindestens zwei Brennflecke umfasst, von denen divergierende Röntgenstrahlbündel stammen, deren Öffnungen in der Summe größer oder gleich 120° sind.

12. Installation nach einem der Ansprüche 8 bis 11, **dadurch gekennzeichnet, dass** sie mindestens einen Brennfleck umfasst, der in der Beförderungsebene (Pc) angeordnet ist.

13. Installation nach einem der Ansprüche 8 bis 12, **dadurch gekennzeichnet, dass** sie umfasst:

   - auf einer Seite einer Schnittebene (Ps) zum Beförderungsvolumen und orthogonal zur Beförderungsebene (Pc), einen Brennfleck (Fj), von dem ein divergierendes Röntgenstrahlbündel stammt, derart, dass sein Bündel die Schnittebene (Ps) und die zu untersuchende Region durchquert,
   - auf der in Bezug auf die Schnittebene (Ps) gegenüberliegenden Seite, mindestens einen Bildsensor (Cji), der dem Brennfleck (Fj) zugehörig ist, um die von dem Brennfleck (Fj) stammenden Röntgenstrahlen zu empfangen.

14. Installation nach einem der Ansprüche 8 bis 13, **dadurch gekennzeichnet, dass** sie umfasst:

   - auf einer Seite der Beförderungsebene (Pc), einen Brennfleck (Fj), von dem ein divergierendes Röntgenstrahlbündel stammt, derart, dass sein Bündel die Beförderungsebene (Pc) durchquert,
   - auf der in Bezug auf die Beförderungsebene (Pc) gegenüberliegenden Seite, mindestens einen Bildsensor (Cji), der dem Brennfleck (Fj) zugehörig ist, um die von dem Brennfleck (Fj) stammenden Röntgenstrahlen zu empfangen.

15. Installation nach einem der Ansprüche 8 bis 14, **dadurch gekennzeichnet, dass** mindestens ein Brennfleck und zwei Bildsensoren derart angeordnet sind, dass die Projektionsrichtungen der untersuchten Region, die sie empfangen, zueinander einen Nutzwinkel ($\alpha$) von größer oder gleich 45° und kleiner oder gleich 90° und vorteilhafterweise größer oder gleich 60° und kleiner oder gleich 90° besitzen.

16. Installation nach einem der Ansprüche 8 bis 15, **dadurch gekennzeichnet, dass** mindestens ein Brennfleck und ein Bildsensor (Cji) derart angeordnet sind, dass, wenn ein Gegenstand das Feld der Sensoren durchquert, die Projektionsrichtung (Dji) der untersuchten Region auf dem Bildsensor (Cji) einen Öffnungswinkel ($\beta$) mit der Verlagerungsrichtung (T) bildet, der zwischen 10° und 60° beträgt.

17. Installation nach einem der Ansprüche 8 bis 16, **dadurch gekennzeichnet, dass**, da kein Brennfleck (Fj) einer Röntgenstrahl-Erzeugungsröhre sich in dem durchquerten Volumen (Vt) befindet und kein Bildsensor (Lji) sich in dem Beförderungsvolumen (Vt) befindet, wenn ein Gegenstand das Feld der Sensoren durchquert, die Projektionsrichtung (Dji) der untersuchten Region auf dem Bildsensor (Cji) nie einen Öffnungswinkel ($\beta$) von kleiner als 10° mit der Verlagerungsrichtung (T) bildet.

18. Installation nach einem der Ansprüche 8 bis 17, **dadurch gekennzeichnet, dass** die Anzahl und die Anordnung der Bildsensoren (Cji) und der zugehörigen Brennflecke derart sind, dass für jeden Gegenstand der Serie im Laufe seiner Verlagerung die Röntgenprojektionen der zu untersuchenden Region auf den Bildsensoren zwischen vier und fünfzehn unterschiedliche Projektionsrichtungen aufweisen.

19. Installation nach einem der Ansprüche 8 bis 18, **dadurch gekennzeichnet, dass**:

   - die Bildsensoren (Cji) vom linearen Typ sind und jeweils ein lineares Netz von gegenüber Röntgenstrahlen empfindlichen Sensoren umfassen, die entlang einer Unterstützungsgeraden (Lji) angeordnet sind, die mit dem zugehörigen Brennfleck (Fj) eine Projektionsebene (Pji) definiert, die die Projektionsrichtung (Dji) enthält, wobei diese Bildsensoren derart angeordnet sind, dass:

      • mindestens m empfindliche Elemente von jedem dieser Bildsensoren die Röntgenprojektion der Region empfangen, die durch das Röntgenstrahlbündel zu untersuchen ist, das von dem zugehörigen Brennfleck (Fj) stammt,
      • die Projektionsebenen (Pji) für die verschiedenen Sensoren voneinander verschieden und nicht parallel zur Beförderungsebene (Pc) sind.

20. Installation nach Anspruch 19, **dadurch gekennzeichnet, dass** die Unterstützungsgeraden (Lji) von mindestens drei linearen Bildsensoren (Cji) parallel zueinander sind.

21. Installation nach einem der Ansprüche 19 und 20, **dadurch gekennzeichnet, dass** die Unterstützungsgeraden (Lji) von mindestens drei linearen Bildsensoren (Cji) orthogonal zur Beförderungsrichtung (Pc) sind.

**Claims**

1. A method for automatically measuring linear dimensions of manufactured objects (**2**) of a series consisting in:

   - selecting a series of manufactured objects (**2**) in which each of said objects is made of a material with a constant attenuation coefficient at all points of the object;
   - selecting at least one region to be inspected from the objects in which at least one linear dimension is to be measured;
   - transporting, by means of a transport device, the moving objects in a displacement direction (**T**) along a substantially rectilinear trajectory in a conveying plane (**Pc**), these objects generating a conveying volume (**Vt**) during their displacement;

   - positioning, outside the conveying volume (**Vt**), at least one focus (**Fj**) of an X-ray generator tube and image sensors (**Cji**) each exposed and sensitive to X-rays obtained from an associated focus (**Fj**), these X-rays having passed through at least the region to be inspected producing on each image sensor a radiographic projection in the direction of projection (**Dji**);
   - acquiring using image sensors (**Cji**), for each object during its displacement, at least three radiographic images of the region to be inspected, obtained from at least three radiographic projections of the region to be inspected, the directions of projection (**Dji**) of which are different from each other;
   - analyzing the at least three radiographic images, using a computer system;
   - providing the computer system with an a priori geometric model of the region to be inspected for the series of objects;
   - determining using the computer system by considering a constant attenuation coefficient and from the a priori geometric model and at least three radiographic images of the region to be inspected, a digital geometric model of the region to be inspected for each object of the series consisting of at least two three-dimensional points each belonging to a border surface of the region to be inspected and located in a plane not orthogonal to a direction of projection **Dji;**
   - for each object of the series, determining from the digital geometric model of the region to be inspected, at least one linear dimension measurement of the region to be inspected as the distance between at least two three-dimensional points each belonging to a border surface of the region to be inspected and located in a plane not orthogonal to a direction of projection (**Dji**).

2. The method according to claim 1, **characterized in that** it consists in determining a digital geometric model consisting of:

   - at least two three-dimensional points of the space each belonging to a border surface of the region to be inspected and located in a plane not orthogonal to a direction of projection (**Dji**), and not parallel to the displacement direction (**T**);
   - and/or at least one three-dimensional surface of the region to be inspected containing points not belonging to a plane orthogonal to a direction of projection (**Dji**), and not belonging to a plane parallel to the displacement direction (**T**);
   - and/or at least one section of the region to be inspected, according to a plane different from a plane orthogonal to a direction of projection (**Dji**) and different from a plane parallel to the displacement direction (**T**).

3. The method according to one of the preceding claims, **characterized in that** it consists in providing the computer system with the value of the constant attenuation coefficient.

4. The method according to one of the preceding claims, **characterized in that** it consists in providing the computer system with the a priori geometric model of the region to be inspected from the series, obtained by:

    - the digital model for computer design of objects of the series;
    - or the digital geometric model obtained from the measurement of one or more object(s) of the same series by a measuring device;
    - or the digital geometric model generated by the computer system from entered values and/or from drawings and/or shapes selected by an operator on a man machine interface of the computer system.

5. The method according to one of the preceding claims, **characterized in that** it consists in acquiring, using image sensors (**Cji**), for each object of the series during its displacement, no radiographic image of the inspected region corresponding to a projection direction (**Dji**) having an opening angle (β) with the displacement direction (**T**) less than 10°.

6. The method according to one of the preceding claims, **characterized in that** it consists in making and acquiring radiographic projections of the inspected region of an object so that the X-rays from the focus or foci and reaching the image sensors (**Cji**) do not pass through any other object.

7. The method according to one of the preceding claims, **characterized in that**:

    - the image sensors (**Cji**) are of the linear type each including a linear array of X-ray sensitive elements, distributed along a support straight line (**Lji**) defining with the associated focus (**Fj**), a projection plane (**Pji**) containing the direction of projection (**Dji**), these image sensors being arranged so that:
    - at least m sensitive elements of each of these image sensors receive the radiographic projection of the region to be inspected by the X-ray beam obtained from the associated focus (**Fj**);
    - the projection planes (**Pji**) for the different sensors are distinct from each other and not parallel to the conveying plane (**Pc**);
    - using each of the at least three linear image sensors (**Cji**), at each incremental displacement of each container along the trajectory (**T**), radiographic linear images of the region to be inspected are acquired according to a selected number so that for each object, the entire region to be inspected is completely represented in all the linear radiographic images;
    - analyzing for each object, the at least three sets of linear radiographic images of the region to be inspected.

8. A facility for automatically measuring linear dimensions of at least one region to be inspected of manufactured objects of a series, the facility including:

    - a device for transporting objects in a direction materialized by a displacement vector (**T**), along a substantially rectilinear trajectory in a conveying plane (**Pc**), the objects traversing a conveying volume (**Vt**) extended in the direction (**T**);
    - at least one focus (**Fj**) of an X-ray generator tube located outside the traversed volume (**Vt**), and creating a divergent X-ray beam directed to pass through at least one region to be inspected of the object;
    - at least three image sensors (**Cji**), located outside the conveying volume (**Vt**), so as to receive X-rays obtained from an associated focus (**Fj**), the focus or foci (**Fj**) and the image sensors (**Cji**) being arranged so that each image sensor receives the radiographic projection of the region to be inspected by the rays obtained from the focus (**Fj**) when the object passes through these rays, the directions of projection of these radiographic projections being different from each other;
    - an acquisition system connected to the image sensors (**Cji**), so as to acquire for each object during its displacement, at least three radiographic projections of the region to be inspected with all different directions of projection (**Dij**);
    - a device for providing a computer system with an a priori geometric model of the region to be inspected for the series of objects; the computer system:

        • determining a digital geometric model for each object of the series consisting of at least two three-dimensional points each belonging to a border surface of the region to be inspected and located in a plane not orthogonal to a direction of projection (**Dji**), by considering a constant coefficient of attenuation of the material for the objects, from the a priori geometric model and from at least three radiographic projections of the region to be inspected;
        • determining for each object of the series, from the digital geometric model of the region to be inspected, at least one linear measurement of the region to be inspected as the distance between at least two three-dimensional points each belonging to a border surface of the region to be inspected and located in a non-orthogonal projection plane (**Dji**).

9. The facility according to the claim 8, **characterized in that** it comprises a device for providing the computer system with values and/or tolerances for the required linear dimensions, and/or at least one geometric reference model.

10. The facility according to one of claims 8 or 9, **characterized in that** it comprises at least two foci (**F1**, **F2**) for producing X-rays, positioned separately in two distinct positions and at least three image sensors (**Cji**), sensitive to X-rays and positioned so that:

   - each focus emits its beam through at least the region to be inspected to reach at least one associated sensor (**Cji**);
   - each sensor (**Cji**) is associated with one focus and receives the X-rays obtained from said focus after passing through the region to be inspected.

11. The facility according to one of claims 8 or 9, **characterized in that** it includes, at least one focus from which a divergent X-ray beam is obtained with an opening greater than or equal to 120° or at least two foci from which divergent X-ray beams are obtained the sum of the openings of which is greater than or equal to 120°.

12. The facility according to one of claims 8 to 11, **characterized in that** it includes at least one focus disposed in the conveying plane (**Pc**).

13. The facility according to one of claims 8 to 12, **characterized in that** it includes:

   - on one side of a plane (**Ps**) intersecting with the conveying volume and orthogonal to the conveying plane (**Pc**), a focus (**Fj**) from which a divergent X-ray beam is obtained, so that its beam passes through the intersecting plane (**Ps**) and the region to be inspected;
   - on the opposite side with respect to the intersecting plane (**Ps**), at least one image sensor (**Cji**) associated with said focus (**Fj**) to receive the X-rays obtained from said focus (**Fj**).

14. The facility according to one of claims 8 to 13, **characterized in that** it includes:

   - on one side of the conveying plane (**Pc**), a focus (**Fj**) from which a divergent X-ray beam is obtained, so that its beam passes through the conveying plane (**Pc**);
   - on the opposite side with respect to the conveying plane (**Pc**), at least one image sensor (**Cji**) associated with said focus (**Fj**) to receive the X-rays obtained from said focus (**Fj**).

15. The facility according to one of claims 8 to 14, **characterized in that** at least one focus and two image sensors are arranged so that the directions of projection of the inspected region which they receive have therebetween a useful angle ($\alpha$) greater than or equal to 45° and less than or equal to 90° and, advantageously greater than or equal to 60° and less than or equal to 90°.

16. The facility according to one of claims 8 to 15, **characterized in that** at least one focus and one image sensor (**Cji**) are arranged so that, when an object passes through the field of the sensors, the direction of projection (**Dji**) of the inspected region on the image sensor (**Cji**) makes an opening angle ($\beta$) with the displacement direction (**T**) comprised between 10° and 60°.

17. The facility according to one of claims 8 to 16, **characterized in that**, no focus (**Fj**) of an X-ray generator tube is located in the traversed volume (**Vt**), no image sensors (**Cji**), is located in the conveying volume (**Vt**), when an object passes through the sensor field, the direction of projection (**Dji**) of the inspected region on the image sensor (**Cji**) never makes an opening angle ($\beta$) with the displacement direction (**T**) less than 10°.

18. The facility according to one of claims 8 to 17, **characterized in that** the number and arrangement of the image sensors (**Cji**) and associated foci, are such that for each object of the series during its displacement, the radiographic projections of the region to be inspected on the image sensors have between four and fifteen different projection directions.

19. The facility according to one of claims 8 to 18, **characterized in that**:

   - the image sensors (**Cji**) are of the linear type and each include a linear array of X-ray sensitive elements, distributed along a support straight line (**Lji**) defining with the associated focus (**Fj**), a projection plane (**Pji**) containing the projection direction (**Dji**), these image sensors being arranged so that:

      • at least m sensitive elements of each of these image sensors receive the radiographic projection of the region to be inspected by the X-ray beam from the associated focus (**Fj**);
• the projection planes (**Pji**) for the different sensors are distinct from each other and not parallel to the conveying plane (**Pc**).

20. The facility according to claim 19, **characterized in that** at least three linear image sensors (**Cji**) have their support straight lines (**Lji**) parallel to each other.

21. The facility according to one of claims 19 and 20, **characterized in that** at least three linear image sensors (**Cji**) have their support straight lines (**Lji**) orthogonal to the conveying plane (**Pc**).

FIG.1

FIG.2

FIG.3

FIG.4

FIG.5

FIG.6

FIG.7

FIG.8

FIG.9

FIG.10

FIG.11

FIG.12

## RÉFÉRENCES CITÉES DANS LA DESCRIPTION

**Documents brevets cités dans la description**

- DE 102014103137
- US 8971484 B
- US 7319737 B
- US 7221732 B
- JP S60260807 B
- US 5864600 A
- US 20090262891 A
- DE 19756697
- WO 2010092368 A
- US 2010220910 A

**Littérature non-brevet citée dans la description**

- **J.P.KRUTH.** Computed tomography for dimensional metrology. *CIRP Annals,* 2011, vol. 60 (2), 821-842